# Europäisches Patentamt

## European Patent Office

## Office européen des brevets

(11) Veröffentlichungsnummer: **0 166 106**
**B1**

(12) # EUROPÄISCHE PATENTSCHRIFT

(45) Veröffentlichungstag der Patentschrift:
**04.01.89**

(51) Int. Cl.⁴: **G 01 S 17/10**

(21) Anmeldenummer: **85104783.7**

(22) Anmeldetag: **29.01.82**

(54) **Empfängerschaltung für ein Entfernungsmessgerät nach dem Prinzip der Lichtimpuls-Laufzeitmessung.**

(30) Priorität: **03.02.81 DE 3103567**

(43) Veröffentlichungstag der Anmeldung:
**02.01.86 Patentblatt 86/1**

(45) Bekanntmachung des Hinweises auf die Patenterteilung:
**04.01.89 Patentblatt 89/1**

(84) Benannte Vertragsstaaten:
**CH FR GB LI NL SE**

(56) Entgegenhaltungen:
**DE-A-2 634 627**

(73) Patentinhaber: **MTC Messtechnik und Optoelektronik AG, Avenue Jean Jacques Rousseau 5, CH- 2000 Neuchâtel (CH)**

(72) Erfinder: **Chaborski, Hoiko, Dipl.- Ing., Englschalkinger Strasse 239E, D-8000 München 81 (DE)**
Erfinder: **Mehnert, Walter, Dr. Dipl.- Ing., Grillparzerstrasse 6, D-8012 Ottobrunn (DE)**

(74) Vertreter: **Strasser, Wolfgang, Dipl.- Phys, Patentanwälte Strohschänk, Uri & Strasser Innere Wiener Strasse 8, D-8000 München 80 (DE)**

## Beschreibung

Die Erfindung betrifft eine Empfängerschaltung für ein Entfernungsmeßgerät nach dem Prinzip der Lichtimpuls-Laufzeitmessung gemäß dem Oberbegriff von Anspruch 1.

Ein solches Entfernungsmeßgerät ist beispielsweise aus der DE-A-2 634 627 bekannt, gemäß der Meßlichtimpulse und Referenzlichtimpulse zwei getrennten elektro-optischen Empfängern zugeführt und in zwei getrennten Empfangskanälen in zeitsignifikante Signale zum Starten bzw. Stoppen der jeweiligen Laufzeitmessung umgesetzt werden. Auf solche zweikanalige Geräte ist die Erfindung jedoch nicht beschränkt. Sie ist ebenso bei optisch einkanaligen Entfernungsmeßgeräten anwendbar, die nur einen einzigen Empfangskanal mit einem einzigen elektro-optischen Empfänger aufweisen, mit dessen Hilfe aus empfangenen Lichtimpulsen zeitsignifikante Signale zum Starten und/oder Beenden der jeweiligen Laufzeitmessungen erzeugt werden.

Wesentlich ist lediglich, daß einem elektro-optischen Empfänger, dem einzelne, kurze Lichtimpulse zugeführt werden, ein Resonanzsystem nachgeschaltet ist, das durch das elektrische Signal, das der elektro-optische Empfänger beim Empfang eines solchen Lichtimpulses abgibt, zu einem gedämpften Schwingungsvorgang angestoßen wird, wie dies in der DE-A-2 634 627 beschrieben ist.

Zwar sind die Amplituden der Halbwellen eines solchen Schwingungsvorgangs von der Stärke des Anstoßes, d. h. von der Helligkeit des betreffenden Lichtimpulses abhängig; die Periodenlänge dieses Schwingungsvorganges ist aber kurzfristig außerordentlich konstant, so daß man z. B. bei einem optisch einkanaligen Meßgerät davon ausgehen kann, daß der zeitliche Abstand eines bestimmten Nulldurchganges eines beim Empfang eines Referenzlichtimpulses angestoßenen Schwingungsvorgangs vom Empfangszeitpunkt dieses Lichtimpulses exakt gleich dem Abstand des entsprechenden Nulldurchganges des beim Empfang des zugehörigen Meßlichtimpulses angestoßenen Schwingungsvorganges ist. Somit ist es ohne merklichen Meßfehler möglich, statt des zeitlichen Abstandes der meßtechnisch nur sehr schwer zu erfassenden Empfangszeitpunkte der beiden Lichtimpulse den Zeitabstand zweier gleichliegender zugehöriger Nulldurchgänge zu messen.

Da die Erkennung der Nulldurchgänge durch den Vergleich des Ausgangssignals des Resonanzsystems bzw. eines ihm nachgeschalteten Verstärkers mit dem Nullpegel erfolgt, dieser Nullpegel aber der Ruhelage des nichtangestoßenen Resonanzsystems entspricht, ist es bekannt, einen Nulldurchgangs-Komparator, der den eben erwähnten Vergleich durchführt, erst dann freizugeben, wenn eine andere Komparatoranordnung das Anschwingen des Resonanzsystems festgestellt hat, weil sonst bereits geringfügige, dem Nullpegel überlagerte Störungen laufend zur Auslösung von die Laufzeitmessung startenden und anhaltenden Signalen führen würden.

Die das Anschwingen des Resonanzsystems feststellende Komparatoranordnung umfaßt nach dem Stand der Technik einen einzigen Komparator, der das Ausgangssignal eines dem Resonanzsystem nachgeschalteten Verstärkers mit einer vom Nullpegel verschiedenen Referenzspannung vergleicht, die etwas niedriger als die maximale (verstärkte) Amplitude eines Schwingungsvorganges ist, der von einem Lichtimpuls mit der geringsten, gerade noch verarbeitbaren Helligkeit angestoßen werden kann.

Welche Helligkeit das ist, hängt vom jeweiligen Signal/Rausch-Verhältnis ab. Je geringer die Hintergrundshelligkeit ist, die auf den elektro-optischen Empfänger trifft, umso geringer kann die Helligkeit von Lichtimpulsen sein, die durch die Wahl der oben erwähnten Referenzspannung zur Erzeugung eines zeitsignifikanten Signals noch zugelassen werden.

Nun soll der Empfangskanal eines Entfernungsmeßgerätes nicht nur Lichtimpulse empfangen und einwandfrei verarbeiten, deren Helligkeit in unmittelbarer Nähe dieser untersten Grenze liegt. Er muß vielmehr auch in der Lage sein, auf den Empfang von Lichtimpulsen, deren Helligkeit beispielsweise um einen Faktor 15 größer ist, als diese minimale Helligkeit, mit der Erzeugung von zeitsignifikanten Signalen zu reagieren, deren zeitliche Lage exakt mit dem Empfangszeitpunkt des zugehörigen Lichtimpulses korreliert ist.

Nun hat sich in der Praxis gezeigt, daß bei einer Empfängerschaltung für ein Entfernungsmeßgerät gemäß der DE-A-2 634 627 diese exakte zeitliche Korrelation zwar über den größten Teil des vom Empfangskanal zu verarbeitenden Helligkeitsbereiches mit einer Sicherheit erzielt werden kann, die eine Meßgenauigkeit von weniger als ± 1 cm, ja sogar bis herunter zu ± 1 mm zuläßt. Ein Problem ergibt sich jedoch daraus, daß diese exakte zeitliche Korrelation nicht über den gesamten verarbeitbaren Helligkeitsbereich erzielt werden kann. Vielmehr hat sich herausgestellt, daß im untersten Teil dieses Helligkeitsbereiches, d. h. also bei Lichtimpulsen, deren Helligkeit gerade noch ausreicht, um einen Schwingungsvorgang anzustoßen, dessen größte Amplitude (nach Verstärkung) über die vorgegebene Referenzspannung des Komparators hinausgeht, der das Anschwingen des Resonanzsystems erkennen und den Nulldurchgangs-Komparator freigeben soll, statistisch schwankende Änderungen in der Reaktionszeit des Empfangskanals auftreten, die eine exakte zeitliche Korrelation zwischen dem Empfangszeitpunkt des betreffenden Lichtimpulses und dem Zeitpunkt, in dem das zugehörige zeitsignifikante Signal erzeugt wird, unmöglich machen. Damit lassen sich in diesem untersten Teil des eigentlich verarbeitbaren Helligkeitsbereiches mit der bekannten Schaltungsanordnung keine brauchbaren Meßergebnisse mehr gewinnen.

Demgegenüber liegt der Erfindung die Aufgabe zugrunde, eine Empfängerschaltung der im Oberbegriff des Anspruches 1 niedergelegten Art so weiterzubilden, daß eine exakte zeitliche Korrelation zwischen dem Empfangszeitpunkt eines Lichtimpulses und dem Erzeugungszeitpunkt des zugehörigen zeitsignifikanten Signals über den gesamten verarbeitbaren Helligkeitsbereich hinweg erzielbar ist.

Zur Lösung dieser Aufgabe sieht die Erfindung die im Anspruch 1 zusammengefaßten Merkmale vor.

Diesen erfindungsgemäßen Maßnahmen liegt die Erkenntnis zugrunde, daß die erwähnten statistisch schwankenden Änderungen im zeitlichen Ansprechverhalten des Empfangskanals des bekannten Entfernungsmeßgerätes auf einer bis dahin nicht bekannten Eigenschaft der hier zum Einsatz kommenden Komparatoren beruhen. Wird beispielsweise bei einer Dynamik von 1 : 15 einem Komparator, dessen Referenzspannung 100 mV beträgt, und der somit auf Signale ansprechen soll, die zwischen 100 mV und 1500 mV liegen, ein Schwingungssignal zugeführt, das nur wenig, beispielsweise um 0,5 mV bis 5 mV die Referenzspannung übersteigt, so kann es bis zu 100 ns dauern, bis der Komparator mit der Erzeugung eines entsprechenden Ausgangssignals reagiert. Die Länge dieser Verzögerung des Ausgangssignals ist starken statistischen Schwankungen unterworfen, und kann von Fall zu Fall jeweils eine andere sein. Da beim Stand der Technik das von diesem Komparator abgegebene Ausgangssignals als Steuersignal für die Freigabe des bis dahin gesperrten Nulldurchgangs-Komparators dient, kommt es bei schwachen Lichtimpulsen somit immer wieder vor, daß der Nulldurchgangs-Komparator mit einer entsprechenden Verzögerung freigegeben wird und einen viel späteren als den eigentlich gewünschten Nulldurchgang des angestoßenen Schwingungsvorgang detektiert.

Wegen der erwähnten statistischen Schwankungen dieser Verzögerungen kommt es hierdurch auch bei solchen optisch einkanaligen Entfernungsmeßgeräten zu falschen Meßergebnissen, bei denen Meß- und Referenzlichtimpulse in ein und demselben Empfangskanal verarbeitet werden.

Mittels der in Anspruch 1 definierten Erfindung wird dieses Problem dadurch gelöst, daß das Schwingungssignal des Resonanzsystems (gegebenenfalls nach Verstärkung) einem zweiten Komparator zugeführt wird, dessen Referenzspannung niedriger ist, als die des ersten Komparators, und der ein Steuersignal nur dann abgibt, wenn das Schwingungssignal diese zweite Referenzspannung nach einem vorausgehenden Überschreiten wieder unterschreitet. Darüber hinaus ist eine Schaltungsanordnung vorgesehen, die abfragt, ob die beiden Ausgangs- bzw. Steuersignale der beiden Komparatoren in der richtigen zeitlichen Reihefolge auftreten, d. h. ob zuerst das Steuersignal des ersten und dann das Steuersignal des zweiten Komparators erscheint. Nur wenn diese Reihenfolge eingehalten ist, wird ein Freigabesignal für den Nulldurchgangs-Komparator erzeugt, der dann den gewünschten Nulldurchgang detektieren und für die Erzeugung eines zu diesem Nulldurchgang zeitlich exakt korrelierten zeitsignifikanten Signals sorgen kann. Zwar weist auch der zweite Komparator die oben beschriebene Eigenschaft auf, daß sich die Erzeugung seines Ausgangssignals statistisch schwankend verzögern kann, wenn seine Referenzspannung vom Eingangssignal nur sehr wenig überschritten wird. Seine Referenzspannung wird daher um soviel niedriger als die Referenzspannung des ersten Komparators gewählt, daß ein Signal, das gerade gleich der Referenzspannung des ersten Komparatos ist (und somit bei diesem die unerwünschte Ansprechverzögerung auslösen kann), soweit über der Referenzspannung des zweiten Komparators liegt, daß bei diesem eine Ansprechverzögerung mit Sicherheit nicht auftritt. Hat also die Amplitude der ersten, das richtige Vorzeichen besitzende Halbwelle des Schwingungssignals eine Größe, die die erste Referenzspannung gerade erreicht oder nur so geringfügig überschreitet, daß es zu einer Ansprechverzögerung des ersten Komparators kommen kann, und tritt dann auch eine solche Ansprechverzögerung mit einer Länge auf, die eine rechtzeitige Freigabe des Nulldurchgangs-Komparators unmöglich macht, so erzeugt der zweite Komparator sein Ausgangs- bzw. Steuersignal mit Sicherheit vor dem ersten Komparator und die Freigabe des Nulldurchgangs-Komparators wird unterdrückt. Es wird in diesen Fällen also kein zeitsignifikantes Signal erzeugt und die betreffende Laufzeitmessung wird entweder gar nicht begonnen oder läuft solange weiter, bis das Gerät die übermäßig lange Laufdauer erkennt und die Messung selbsttätig abbricht.

Ein besonderer Vorteil dieser Anordnung ist darin zu sehen, daß in all den Fällen, in denen beim Empfang eines sehr schwachen Lichtimpulses die Ansprechverzögerung des ersten Komparators nicht auftritt oder einen genügend kleinen Wert besitzt, so daß das Ausgangssignal des ersten Komparators vor dem des zweiten Komparators erzeugt wird, eine ganz "normale" Detektion des gewünschten Nulldurchgangs und damit eine einwandfreie Erzeugung eines zeitsignifikanten Signals stattfindet. Der verarbeitbare Helligkeitsbereich wird also an seiner unteren Grenze nicht verkleinert, sondern es werden nur die zufällig auftretenden Fälle ausgesondert und verworfen, in denen die Verzögerung des Ausgangssignals des ersten Komparators zu groß ist.

Wie bereits erwähnt, werden die Ausgangssignale des Resonanzsystems vorzugsweise verstärkt bevor sie den Komparatoren zugeführt werden. Der Null-Gleichspannungspegel am Verstärkerausgang wird dabei durch eine eigene Regelschaltung konstant gehalten, damit jederzeit ein einwandfreies Detektieren der Nulldurchgänge des verstärkten Schwingungssignals möglich ist.

Vorzugsweise umfaßt die Schaltungsanordnung zur Freigabe des Nulldurchgangs-Komparators eine durch das Ausgangssignal des ersten Komparators setzbare Speicherschaltung und eine logische Verknüpfungsschaltung, die nur bei gesetzter Speicherschaltung das Steuersignal des zweiten Komparators als Freigabesignal für den Nulldurchgangs-Komparator weitergibt.

Gemäß Anspruch 4 ist die vorgegebene Halbschwingung, deren Amplitude vermittels der beiden Komparatoren mit den beiden vorgegebenen Werten verglichen wird, die zweite Halbschwingung des jeweiligen Schwingungsvorganges des Resonanzsystems. Weiterhin ist gemäß Anspruch 5 eine Verzögerungseinrichtung vorgesehen, die das von der Freigabe-Schaltungsanordnung abgegebene Freigabesignal für den Nulldurchgangs-Komparator so verzögert, daß ein späterer als der erste auf das Steuersignal des zweiten Komparators folgender, vorzugsweise der vierte Nulldurchgang des Schwingungssignals des Resonanzsystems zur Erzeugung eines zeitsignifikanten Signals verwendet wird. Hierdurch dient ein Nulldurchgang einer angestoßenen Schwingung zur Erzeugung eines zeitsignifikanten Signals, der einerseits möglichst weit vom Anstoßzeitpunkt entfernt liegt, um sicherzustellen, daß alle mit dem Aussenden und Empfangen des betreffenden Lichtimpulses verbundenen Störeffekte abgeklungen sind, um ein einwandfreies Erkennen des Nulldurchgangs zu ermöglichen. Andererseits liegt dieser Nulldurchgang möglichst weit vom abklingenden Ende des Schwingungsvorganges entfernt, um sicherzustellen, daß der Nulldurchgang möglichst steil erfolgt und somit dem Schwingungsvorgang eventuell überlagerte Störungen nur zu geringfügigen Verschiebungen der zeitlichen Lage dieses Nulldurchganges führen.

Vorzugsweise wird gemäß Anspruch 7 die logische Verknüpfungsschaltung von einem normalerweise zurückgesetzten D-Flip-Flop gebildet, an dessen Dateneingang ein gleichzeitig mit dem Steuersignal des ersten Komparators erzeugtes Freigabesignal und an dessen Takteingang ein gleichzeitig mit dem Steuersignal des zweiten Komparators erzeugtes Taktsignal gelegt ist und dessen einer Ausgang im gesetzten Zustand des D-Flip-Flops über die Verzögerungseinrichtung ein den Nullpegel-Komparator freigebendes Signal abgibt, wobei das D-Flip-Flop beim ersten Ansprechen des Nulldurchgang-Komparators rücksetzbar ist.

Um zu verhindern, daß die Komparatoren zur Unzeit auf irgendwelche Störsignale ansprechen und die Erzeugung von fehlerhaften zeitsignifikanten Signalen veranlassen, ist nach Anspruch 8 vorgesehen, daß der Nulldurchgangs-Komparator über eine Gatterschaltung sowohl durch das von der Verzögerungseinrichtung verzögerte Ausgangssignal des D-Flip-Flops als auch durch das von einem seiner Ausgänge im Ruhezustand abgegebene Signal sperrbar ist und daß letzteres durch eine Gatterschaltung dann daran gehindert ist, den Nulldurchgangs-Komparator zu sperren, wenn das D-Flip-Flop gesetzt ist.

Hierdurch bleibt der Nulldurchgangs-Komparator einerseits möglich lange, d. h. bis kurz vor dem Auftreten des zu detektierenden Nulldurchgangs eines Schwingungssignals gesperrt, das vom ersten und zweiten Komparator als "ordnungsgemäß" erkannt worden ist; zum anderen wird der Nulldurchgangs-Komparator nach seinem Ansprechen auf den zu detektierenden Nulldurchgang sofort wieder gesperrt, so daß er auf die weiteren Nulldurchgänge des abklingenden Schwingungsvorganges nicht mehr reagieren kann.

Nach Anspruch 9 werden auch der erste und der zweite Komparator nach erfolgter Abgabe eines Steuersignals in einen Zustand gebracht, in dem sie keine weiteren Steuersignale erzeugen können. In diesem Zustand werden sie durch eine Sperrschaltung solange gehalten, bis diese Sperrschaltung kurz vor dem erwarteten Eintreffen des nächsten Lichtimpulses durch ein Rücksetzsignal desaktiviert wird.

Gemäß Anspruch 10 wird überdies die Speicherschaltung nur während des Anlegens eines kurz vor dem erwarteten Empfang eines Lichtimpulses durch den Empfangskanal erzeugten und in seiner zeitlichen Länge auf die maximale Meßentfernung abgestimmten Zeitfenstersignals für ein vom ersten Komparator abgegebenes Steuersignal empfangsbereit gemacht. Die Länge dieses Zeitfenstersignals ist so bemessen, daß es den Empfangskanal nach der Erzeugung eines Meßlichtimpulses erst dann wieder blockiert, wenn ein Meßlichtimpuls, der die maximale vorgesehene Reichweite des Meßgerätes durchläuft, mit Sicherheit am elektro-optischen Empfänger eingetroffen ist. Sein Ausbleiben zeigt, daß entweder die maximale Reichweite überschritten worden ist oder daß sonst eine Störung, beispielsweise eine übermäßig lange Verzögerung des Steuersignals des ersten Komparators aufgetreten ist, die das Abbrechen des gerade laufenden Meßvorganges erforderlich macht.

Die Erfindung wird im folgenden anhand eines Ausführungsbeispiels unter Bezugnahme auf die Zeichnung beschrieben; in dieser zeigt:

Fig. 1    eine schematische Darstellung der wesentliche Teile eines Entfernungs-

Meßgerätes, bei dem eine erfindungsgemäße Empfängerschaltung zum Einsatz kommen kann,

Fig. 2 ein Schaltbild eines bevorzugten, dem Resonanzsystem des Empfangskanals nachgeschalteten Verstärkers aus Fig. 1,

Fig. 3 ein Schaltbild einer erfindungsgemäßen, zur Erzeugung eines zeitsignifikanten Signals dienenden Schaltungsanordnung aus Fig. 1, und

Fig. 4 ein zur Erläuterung der Funktion der Schaltungsanordnung aus Fig. 3 dienendes Signaldiagramm.

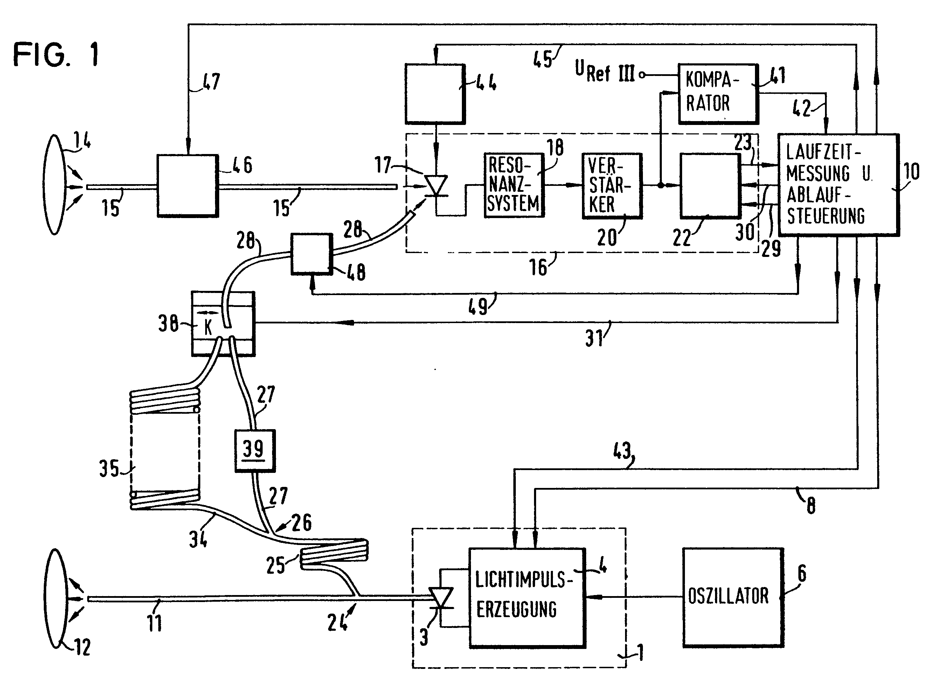

Wie in Fig. 1 dargestellt, besitzt ein Entfernungsmeßgerät, bei dem eine erfindungsgemäße Empfängerschaltung Verwendung finden kann, einen Sender 1, der beispielsweise eine Laser-Sendediode 3 und eine Schaltungsanordnung 4 umfaßt, die zum Ansteuern der Sendediode 3 dient. Die Schaltungsanordnung 4 besteht im wesentlichen aus einem "langsam" aufladbaren Energiespeicher, beispielsweise in Form einer Kapazität, und einem steuerbaren elektronischen Schalter, der dazu dient, die im Energiespeicher angesammelte Energie schnell über die Sendediode 3 zu entladen, worauf die Sendediode 3 mit der Emission eines Laser-Lichtimpulses reagiert.

Die Ansteuerung dieses elektronischen Schalters kann für einen periodischen Betrieb mit Hilfe eines Oszillators 6 erfolgen, der mit vorgegebener Frequenz schwingt. Alternativ oder zusätzlich hierzu kann aber auch vorgesehen werden, daß der steuerbare elektronische Schalter zur Auslösung von Einzelimpulsen über eine Steuerleitung 8 von einer zentralen Ablaufsteuerung 10 getriggert wird.

Ein erster Teil eines jeden von der Sendediode 3 erzeugten Lichtimpulses wird als Meßlichtimpuls verwendet, d. h. er wird über eine Lichtleitfaser 11 und eine Sendeoptik 12, die in Fig. 1 schematisch vereinfacht als einzelne Linse dargestellt ist, zum Zielgegenstand hin ausgesandt, dessen Entfernung gemessen werden soll.

Der zweite Teil eines jeden von der Sendediode 3 erzeugten Lichtimpulses wird als Referenzlichtimpuls verwendet, d. h. er wird durch eine Y-förmige Verzweigung 24 aus der Sende-Lichtleitfaser 11 ausgekoppelt und in einen Referenzlichtweg eingespeist, der zunächst eine Lichtleitfaser-Spule 25 und hinter dieser eine weitere Y-förmige Verzweigung 26 umfaßt, hinter der der Referenzlichtweg in zwei funktional zueinander parallele Abschnitte 27 und 34 mit unterschiedlichen Längen aufgeteilt ist. Diese beiden Abschnitte vereinigen sich an einem optischen Umschalter 38 zu einem einzigen Lichtweg 28, der zu einer Photodiode 17 führt, die den elektro-optischen Empfänger des Empfangskanals 16 bildet.

An der weiteren Y-förmigen Verzweigung 26 wird jeder Referenzlichtimpuls wieder in zwei Teile aufgespalten, von denen sich der eine längs des kurzen Abschnittes 27 und der andere längs des langen Abschnittes 34 weiterbewegt. In Abhängigkeit von der Stellung des optischen Umschalters 38, der über eine Leitung 31 von der zentralen Ablaufsteuerung 10 betätigt wird, kann nur der eine oder der andere dieser beiden Teile eines jeden Referenzlichtimpulses über den Lichtweg 28 zur Photodiode 17 gelangen, während der jeweils andere Teil unterdrückt wird.

Bei einem Zielgegenstand, der einen hinreichend großen Abstand aufweist, befindet sich der optische Umschalter 38 in einer Stellung, in der er den kurzen Abschnitt 27 des Referenzlichtweges mit dem Lichtweg 28 verbindet, so daß ein Referenzlichtimpuls, der an der Verzweigung 24 von einem von der Sendediode 3 erzeugten Lichtimpuls abgezweigt wurde, als erster an der Photodiode 17 anlangt. Derjenige Teil des zugehörigen Meßlichtimpulses, der vom Zielgegenstand zum Meßgerät reflektiert und mit Hilfe einer wieder vereinfacht als einzelne Linse dargestellten Empfangsoptik 14 in einen Lichtweg 15 eingespeist wird, der ebenfalls zur Photodiode 17 führt, kommt in diesem Fall nach dem Referenzlichtimpuls an der Photodiode 17 an.

Jedes der beiden elektrischen Signale, die von der Photodiode 17 in Antwort auf den Empfang dieser beiden Lichtimpulse erzeugt werden, dient zum Anstoßen eines Schwingungsvorganges in einem der Photodiode 17 nachgeschalteten Resonanzsystem 18, das beispielsweise gemäß der DE-A-2 634 627 als Parallel-Resonanzschwingkreis ausgebildet sein kann. Alternativ hierzu kann dieses Resonanzsystem 18 aber auch von einem Serien-Resonanzschwingkreis oder einem anderen elektromagnetischen Schwingungssystem gebildet sein.

Entscheidend ist, daß das Resonanzsystem 18 durch das von der Photodiode 17 beim Empfang eines jeden Lichtimpulses abgegebene Signal zu einem gedämpften Schwingungsvorgang angeregt wird, der im allgemeinen sinusförmig ist und mit exponentiell abnehmender Amplitude der einzelnen Halbschwingungen verläuft. Wenn der Abstand des Zielgegenstandes groß ist, dann ist auch der Zeitabstand zwischen den beiden Lichtimpulsen groß und der erste Schwingungsvorgang, der durch den Empfang des Referenzlichtimpulses ausgelöst wird, ist vollständig abgeklungen, wenn der Meßlichtimpuls an der Photodiode 17 eintrifft und den zweiten Schwingungsvorgang auslöst.

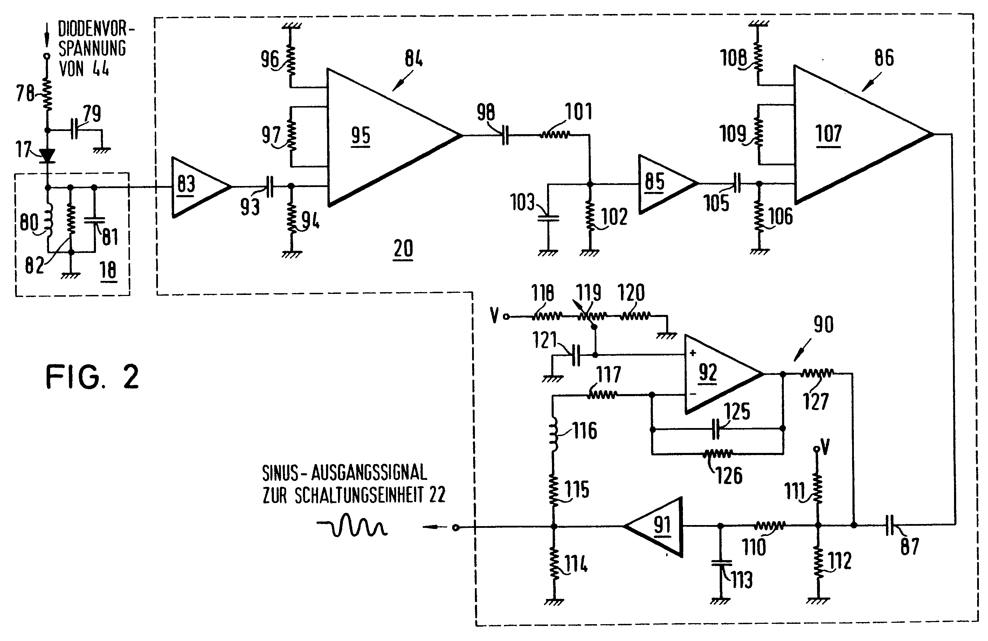

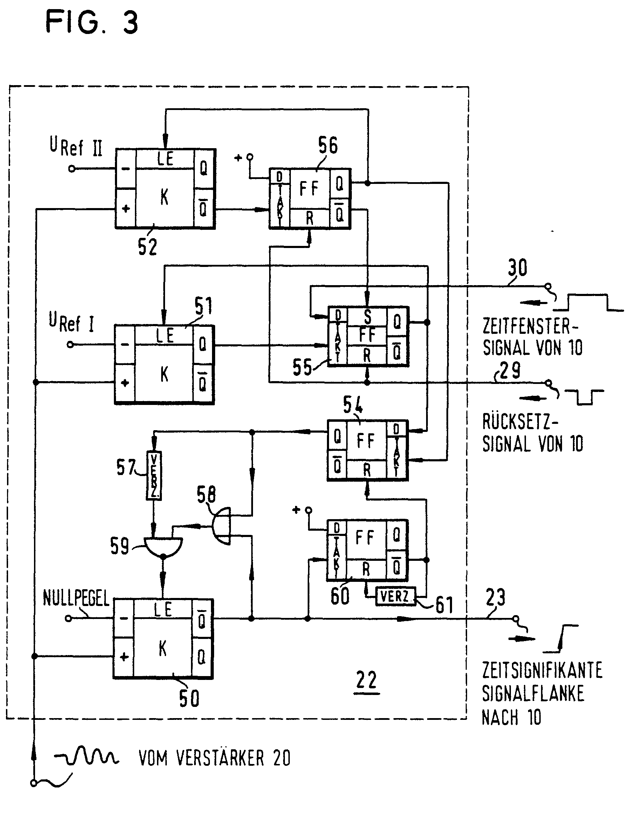

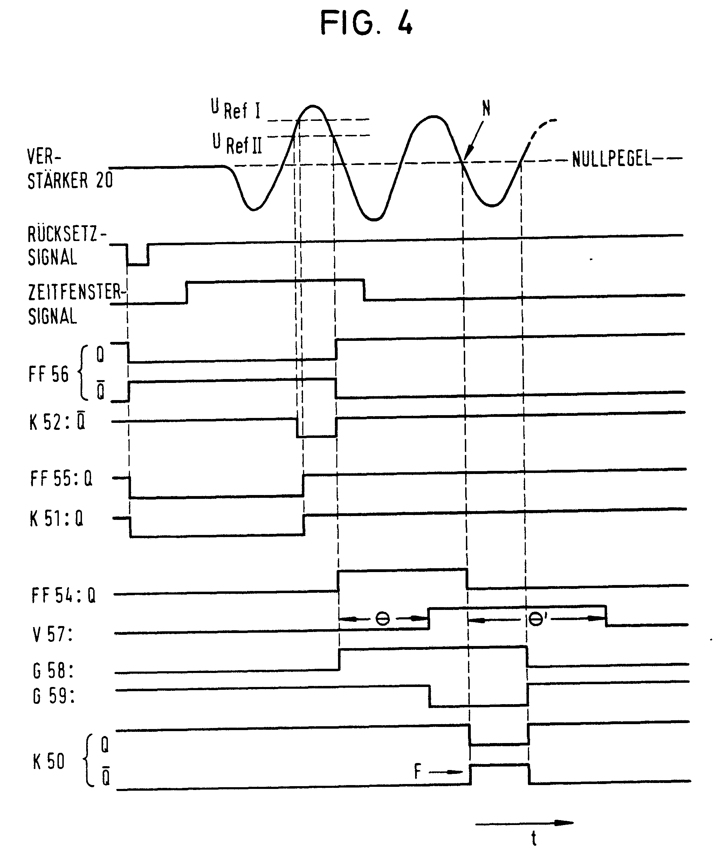

Das bei jedem dieser Schwingungsvorgänge vom Resonanzsystem 18 abgegebene Signal wird durch einen nachgeschalteten Verstärker 20 (siehe Fig. 2) verstärkt und dann einer zur Erzeugung eines zeitsignifikanten Signals dienenden Schaltungsanordnung 22 zugeführt. Hauptaufgabe dieser Schaltungsanordnung 22 ist es, immer dann, wenn von der Photodiode 17 ein Lichtimpuls empfangen worden ist, ein zeitsignifikantes Signal, d. h. ein Signal zu erzeugen, dessen zeitliche Lage in genau definierter Weise mit dem zeitlichen Schwerpunkt des betreffenden Lichtimpulses korreliert ist. Dies wird weiter unten unter Bezugnahme auf die Fig. 3 und 4 näher erläutert.

Das zeitsignifikante Signal kann beispielsweise eine fallende oder steigende Impulsflanke sein. Aus dem oben Gesagten ergibt sich, daß für jedes Paar von Meß- und Referenzlichtimpulsen, die nacheinander an der Photodiode 17 eintreffen, zwei zeitsignifikante Signale erzeugt werden, die ebenfalls nacheinander auftreten. Das jeweils zuerst auftretende zeitsignifikante Signal wird immer dazu verwendet, die Laufzeitmessung des betreffenden Meßlichtimpulses zu starten, während das zweite dazu verwendet wird, diese Laufzeitmessung zu beenden. In dem hier betrachteten Fall, in welchem der Meßlichtimpuls von einem Zielgegenstand mit großer Entfernung reflektiert wird, wird zuerst das dem Referenzlichtimpuls entsprechende zeitsignifikante Signal erzeugt, das somit als Startsignal für die Laufzeitmessung dient. Das dem Meßlichtimpuls entsprechende zeitsignifikante Signal wird etwas später erzeugt und dient daher zur Beendigung der Laufzeitmessung.

Zu diesem Zweck werden die beiden zeitsignifikanten Signale über eine Leitung 23 einer Zeitmeßvorrichtung zugeführt, die, da sie nicht Gegenstand der vorliegenden Erfindung ist, der Einfachheit halber mit in die zentrale Ablaufsteuerung 10 aufgenommen wurde.

Zweck der hinter der Y-förmigen Verzweigungsstelle 24 angeordneten Lichtleitfaser-Spule 25 ist es, auch den dem Empfangskanal 16 über den kurzen Abschnitt 27 des Referenzlichtweges zugeführten Referenzlichtimpuls solange zu verzögern, daß bei seinem Eintreffen an der Photodiode 17 die stärksten, bei der Auslösung des Lichtimpulses in unvermeidlicher Weise miterzeugten Störungen bereits weitgehend abgeklungen sind.

Ist das der Photodiode 17 nachgeschaltete Resonanzsystem 18 durch einen empfangenen Lichtimpuls zu einem gedämpften Schwingungsvorgang angestoßen worden, so kann ein erneuter Anstoß, der erfolgt, solange der erste Schwingungsvorgang noch nicht weitgehend wieder abgeklungen ist, zu undefinierten Schwingungsverhältnissen führen, die eine Erzeugung eines dem zweiten Anstoß zeitlich eindeutig zugeordneten zeitsignifikanten Signals durch die Schaltungsanordnung 22 unmöglich machen.

Daher ist vorgesehen, daß die Schaltungsanordnung 22 sofort nachdem sie das ordnungsgemäße Anschwingen des Resonanzsystems 18 erkannt hat, wodurch die Erzeugung eines zeitsignifikanten Signals ausgelöst wird, für einen Mindestzeitraum gesperrt wird, der etwas größer als die Freiwerdezeit τ des Empfangskanals 16 ist, d. h. etwas größer als derjenige Zeitraum, der verstreichen muß, bis das Resonanzsystem 18 nach einem vorausgehenden Anstoß ordnungsgemäß ein zweites Mal angestoßen werden kann. Frühestens nach dem Verstreichen dieses Mindestzeitabstandes erhält die Schaltungsanordnung 22 von der Ablaufsteuerung 10 über die Leitung 29 ein Rücksetz- bzw. Vorbereitungssignal, das sie für Schwingungsvorgänge des Resonanzsystems 18 wieder empfänglich macht.

Nun kann es bei sehr kleinen Abständen zwischen der Meßvorrichtung und dem Zielgegenstand geschehen, daß der vom Zielgegenstand reflektierte Meßlichtimpuls vor dem über die Lichtleitfaser 25, 27 und 28 laufenden Referenzlichtimpuls, gleichzeitig mit dem Referenzlichtimpuls oder innerhalb des oben erwähnten Mindestzeitabstandes nach dem Referenzlichtimpuls an der Empfangsdiode 17 eintrifft. In all diesen Fällen schwingt zwar das Resonanzsystem 18 zunächst einmal an und es wird in Antwort hierauf von der Schaltungsanordnung 22 auch ein erstes und somit die Laufzeitmessung startendes zeitsignifikantes Signal erzeugt. Da in diesen Fällen aber der jeweils spätere der beiden Lichtimpulse zu einen Zeitpunkt an der Empfangsdiode 17 eintrifft, in welchem die Schaltungsanordnung 22 noch nicht wieder freigegeben ist, wird kein zweites, die begonnene Laufzeitmessung anhaltendes zeitsignifikantes Signal mehr erzeugt. Da für jedes derartige Meßgerät eine maximale Meßreichweite vorgebbar ist, erreicht die weiterlaufende Laufzeitmessung sehr schnell einen über die Lichtgeschwindigkeit mit dieser maximalen Meßreichweite verknüpften Wert, dessen Überschreiten von der Ablaufsteuerung 10 erkannt und zum Anlaß für das Abbrechen der betreffenden Laufzeitmessung und für die Auslösung weiterer Steuerbefehle genommen wird.

Einer dieser Steuerbefehle, der über eine Leitung 31 an den optischen Umschalter 38 wiedergegeben wird, veranlaßt diesen, statt des kurzen Abschnittes 27 den langen Abschnitt 34 des Referenzlichtweges mit dem zur Photodiode 17 führenden Lichtweg 28 zu verbinden, wodurch der gleichzeitig mit dem Aussenden eines Meßlichtimpulses von der Sendediode 3 abgegebene Referenzlichtimpuls um wenigstens das Zweifache der oben genannten Freiwerdezeit τ stärker verzögert wird, als beim Durchlaufen des kürzeren Abschnitts 27.

Hierdurch erreicht der an einem nur einen geringen Abstand von der Meßvorrichtung aufweisenden Zielgegenstand reflektierte Meßlichtimpuls die Empfangsdiode 17 so frühzeitig vor dem durch den langen Abschnitt 34 verzögerten Referenzlichtimpuls, daß beide Lichtimpulse durch den Empfangskanal 16 einwandfrei erfaßt und zur Erzeugung von zeitsignifikanten Signalen ausgewertet werden können. Es tritt hier zwar eine Umkehr der Reihenfolge ein, d. h. die Laufzeitmessung wird durch den Meßlichtimpuls gestartet und durch den Referenzlichtimpuls beendet. Dies hat lediglich zur Folge, daß der gemessene Zeitabstand Δ t nicht direkt die gesuchte Laufzeit Δ T des Meßlichtimpulses wiedergibt, sondern mit dieser über die Gleichung Δ T = 2 τ + δ - Δ t verknüpft ist, wobei 2 τ + δ die durch den langen Referenzlichtweg 25, 34, 27 bedingte, sehr genau ausmeßbare Verzögerung bedeutet.

Damit der Referenzlichtimpuls an der Empfangsdiode 17 unabhängig davon, ob er über den kurzen oder den langen Abschnitt des Referenzlichtweges geführt wurde, immer die gleiche Intensität besitzt, ist in den kurzen Abschnitt 27 ein Dämpfungsglied 39 mit einem festen, der durch den langen Abschnitt 34 verursachten Dämpfung entsprechenden Dämpfungswert eingefügt.

Wie Fig. 1 weiterhin zeigt, wird das vom Verstärker 20 abgegebene Signal nicht nur der Schaltungsanordnung 22 zur Erzeugung eines zeitsignifikanten Signals sondern auch einem Komparator 41 zugeführt, der dieses Verstärkersignal mit einer vorgegebenen Referenzspannung vergleicht. Diese Referenzspannung ist so gewählt, daß sie in etwa der oberen Grenze des Linearitätsbereichs des Verstärkers 20 entspricht. Wird dieser Linearitätsbereich überschritten, so kann es zu erheblichen zeitlichen Verschiebungen der Nulldurchgänge des vom Verstärker 20 abgegebenen Schwingungssignals bezüglich des Anstoßzeitpunktes des Resonanzsystems 18 kommen, so daß eine einwandfreie zeitliche Zuordnung dieser Nulldurchgänge bzw. eines von einem solchen Nulldurchgang abgeleiteten zeitsignifikanten Signals zum Empfangszeitpunkt des auslösenden Lichtimpulses nicht mehr gegeben ist.

Bei einem Meßgerät, das einerseits zur Erzielung einer möglichst großen Maximalreichweite mit einer möglichst hohen Sendeleistung und einer hohen Empfindlichkeit auf der Empfängerseite arbeitet, andererseits aber auch in der Lage sein soll, die Entfernung gering beabstandeter, unter Umständen eine hohe Reflektivität besitzender Zielgegenstände exakt auszumessen, kann es insbesondere in den zuletztgenannten Fällen durchaus zu einer Übersteuerung des Verstärkers 20 kommen, da die Amplitude des vom Resonanzsystems 18 abgegebenen Schwingungssignals von der Stärke des Anstoßes, d. h. also von der Helligkeit des von der Photodiode 17 empfangenen Lichtimpulses abhängt. Tritt eine solche Übersteuerung des Verstärkers 20 ein, so wird dies vom Komparator 41 erkannt, der über die Leitung 42 ein entsprechendes Übersteuerungssignal an die Ablaufsteuerung 10 abgibt. Aufgrund dieses Übersteuerungssignals wird von der Ablaufsteuerung 10 der eben gewonnene Meßwert verworfen und die Wiederholung der Messung mit reduzierter Helligkeit des emittierten Meßlichtimpulses und/oder mit erhöhter Dämpfung des empfangenen, reflektierten Meßlichtimpulses und/oder verminderter Empfindlichkeit des Empfängers eingeleitet.

Ein wesentliches Merkmal einer erfindungsgemäßen Empfängerschaltung ist es, daß dem gemäß Fig. 2 über einen Vorwiderstand 78 und einen Glättungskondensator 79 mit Spannung versorgten Photoempfänger also z. B. der Photodiode 17 ein Resonanzsystem 18 nachgeschaltet ist, das vorteilhafterweise aus einem den Arbeitswiderstand der Photodiode 17 bildenden Parallel-Resonanzschwingkreis besteht, der aus einer Spule 80, der Sperrschichtkapazität der Photodiode 17 und einer zusätzlichen, parallelgeschalteten, externen Kapazität 81 sowie einem Widerstand 82 aufgebaut ist.

Dieses Resonanzsystem wird durch einen von der Photodiode 17 empfangenen Lichtimpuls zu einem sinusförmigen Schwingungsvorgang angeregt, dessen zweite Halbwelle im allgemeinen die größte Amplitude besitzt und der dann nach einem exponentiellen Dämpfungsgesetz wieder abklingt.

Es hat sich gezeigt, daß zumindust kurzfristig, mit Sicherheit also für den äußerst kurzen Zeitraum, innerhalb dessen auch bei großen auszumessenden Entfernungen Referenzlichtimpuls und Meßlichtimpuls bei der Empfangs-Photodiode 17 eintreffen, die Nulldurchgänge dieses Schwingungsvorganges in außerordentlich exakter, reproduzierbarer Weise mit dem zeitlichen Schwerpunkt des anstoßenden Lichtimpulses korreliert sind. Dies gilt auch für die Nulldurchgänge des Ausgangssignals des dem Resonanzsystem 18 nachgeschalteten Verstärkers 20, solange dieser Verstärker nicht übersteuert, d. h. in seinem Linearitätsbereich betrieben wird.

Somit sind die Nulldurchgänge des Ausgangssignals des Verstärkers 20 außerordentlich gut geeignet, um ein zeitsignifikantes Signal auszulösen, mit dessen Hilfe die zur Laufzeitmessung des Lichtimpulses erforderliche Zeitmessung entweder gestartet oder beendet wird.

Wie Fig. 2 weiterhin zeigt, besitzt dieser Verstärker 20 als Eingangsstufe einen Impedanzwandler 83, der dazu dient, den relativ hohen Ausgangswiderstand des Resonanzsystems 18 an den niederen Eingangswiderstand der nachfolgenden ersten Verstärkerstufe 84 anzupassen, deren Ausgangssignal über einen weiteren Impedanzwandler 85 der zweiten Verstärkerstufe 86 zugeführt wird. Dieser zweistufige Aufbau des Verstärkers 20, bei dem jede der beiden Stufen eine vergleichsweise niedere Verstärkung von etwa 1 : 10 besitzt, hat den Vorteil, daß er eine wesentlich geringere Schwingneigung zeigt, als ein einstufiger Verstärker mit einer entsprechenden Verstärkung 1 : 100.

Das Ausgangssignal der zweiten Verstärkerstufe 86 wird über einen galvanisch entkoppelnden Kondensator 87 einer den Gleichspannungs-Nullpegel auf einem fest vorgegebenen Wert konstant haltenden Regelschaltung 90 zugeführt, die in ihrem Vorwärts-Zweig einen dritten Impedanzwandler 91 mit zugehöriger Beschaltung und in ihrem Rückkopplungszweig einen normalen driftarmen Operationsverstärker 92 mit entsprechender Beschaltung umfaßt. Der somit gegen temperaturbedingte Schwankungen und aufgrund von Bauelemente-Alterung auftretende Drifterscheinungen stabilisierte Ausgangs-Gleichspannungspegel, dem immer dann, wenn das Schwingungssystem 18 durch einen von der Fotodiode 17 empfangenen Lichtimpuls zu einem Schwingungsvorgang angeregt worden ist, ein verstärktes, gedämpftes, sinusförmiges Schwingungssignal überlagert ist, wird dann unmittelbar der Schaltungsanordnung 22 zur Erzeugung eines zeitsignifikanten Signals zugeführt, deren Hauptaufgabe es ist, das ordnungsgemäße Anschwingen des Resonanzsystems 18 festzustellen und daraufhin einen vorgegebenen Nulldurchgang dieser Schwingung zu detektieren und zur Erzeugung eines zeitsignifikanten Signals zu verwenden.

Bei einer bevorzugten Ausführungsform des Verstärkers 20 finden als Impedanzwandler 83, 85 und 91 integrierte Schaltungen Verwendung, wie sie beispielsweise von der Firma National Semiconductor unter der Bezeichnung LH 0033-CG vertrieben werden.

Das Kernstück einer jeden Verstärkerstufe 84 bzw. 86 bildet ein programmierbarer Verstärker, wie er beispielsweise unter der Bezeichnung AM 733-T von der Firma Advanced Micro Devices vertrieben wird. Im Rückkopplungszweig der Regelschaltung 90 kommt ein Operationsverstärker 92 zum Einsatz, der von der Firma Analog Devices unter der Bezeichnung AD 741 LN angeboten wird. Für alle diese integrierten Schaltungen ist in Fig. 2 nur die zur Signalverarbeitung erforderliche externe Beschaltung wiedergegeben, während die den entsprechenden Datenblättern entnehmbare Stromversorgungs-Beschaltung der klareren Darstellung halber weggelassen ist.

Wie man der Fig. 2 entnimmt, wird das Ausgangssignal des Impedanzwandlers 83 über einen Koppelkondensator 93 dem über einen Widerstand 94 mit Masse verbundenen ersten Eingang des programmierbaren Verstärkers 95 der ersten Verstärkerstufe 84 zugeführt. Der zweite Eingang des Verstärkers 95 ist über einen Widerstand 96 zur Masse hin abgeschlossen. Zwischen die Programmiereingänge ist ein die Verstärkung dieser Verstärkerstufe festlegender Programmierwiderstand 97 geschaltet.

Das Ausgangssignal der ersten Verstärkerstufe 84 wird über einen Kondensator 98 und einen von den Widerständen 101 und 102 gebildeten Spannungsteiler dem Eingang des zweiten Impedanzwandlers 85 zugeführt, der mit dem Verbindungspunkt der beiden Widerstände 101 und 102 verbunden ist. Zwischen diesem Punkt und der Masse ist ein Siebkondensator 103 zur Ausschaltung von HF-Störungen angeordnet.

Das Ausgangssignal des Impedanzwandlers 85 wird über einen galvanisch trennenden Koppelkondensator 105 dem einen, über einen Widerstand 106 mit Masse verbundenen Eingang des programmierbaren Verstärkers 107 der zweiten Verstärkerstufe 86 zugeführt. Der zweite Eingang dieses programmierbaren Verstärkers 107 ist über einen Widerstand 108 auf Masse gelegt, während die Verstärkung dieser Verstärkungsstufe durch einen Programmierwiderstand 109 vorgegeben wird. Hier zeigt sich ein weiterer Vorteil des zweistufigen Aufbaus des Verstärkers 20, da hierdurch die Möglichkeit geboten wird, über zwei voneinander unabhängige Programmiereingänge die gesamte Verstärkung außerordentlich genau festzulegen und an die gegebenen Verhältnisse anzupassen.

Das im folgenden nicht mehr weiter veränderte Wechselspannungs-Ausgangssignal der zweiten Verstärkerstufe 86 gelangt über einen zur galvanischen Entkopplung dienenden Kondensator 87 und einen Vorwiderstand 110 an den Eingang des dritten Impedanzwandlers 91, dessen Eingangs-Gleichspannung grob durch einen Spannungsteiler festgelegt wird, der von den Widerständen 111 und 112 gebildet ist, die zwischen eine Versorgungsspannungsquelle und die Masse geschaltet sind. Die Beeinflussung der Eingangs-Gleichspannung des Impedanzwandlers 91, die dazu dient, seine Ausgangsgleichspannung konstant zu halten, erfolgt mit Hilfe des Ausgangssignals des Rückkopplungszweiges der Regelschaltung 90, das dem gemeinsamen Verbindungspunkt der Widerstände 110, 111 und 112 und des Kondensators 87 zugeführt wird. Unmittelbar zwischen den Eingang des Impedanzwandlers 91 und die Masse ist noch ein HF-Störungen unterdrückender Kondensator 113 geschaltet.

Der Ausgang des Impedanzwandlers 91 ist einerseits über einen Widerstand 114 mit Masse verbunden. Andererseits wird das an ihm erscheinende Gleichspannungssignal über einen Widerstand 115, eine Wechselspannungs-Anteile unterdrückende Drossel 116 und einen weiteren Widerstand 117 dem invertierenden Eingang des Operationsverstärkers 92 zugeführt, dessen nichtinvertierender Eingang mit Hilfe eines Spannungsteilers, der von den Widerständen 118, 119 und 120 gebildet wird, auf ein Referenzpotential gelegt ist, das durch einen Siebkondensator 121 von HF-Störungen freigehalten wird. Das Ausgangssignal des Operationsverstärkers 92 wird einerseits über einen Rückkopplungszweig, der aus einem Kondensator 125 und einem hierzu parallel geschalteten Widerstand 126 besteht, an den invertierenden Eingang des Operationsverstärkers 92 und andererseits über einen Widerstand 127 auf den oben genannten Verbindungspunkt der Widerstände 110, 111, 112 und des Kondensators 87 geführt.

In Fig. 3 ist eine erfindungsgemäß bevorzugte Ausführungsform der Schaltungsanordnung 22 zur Erzeugung von zeitsignifikanten Signalen mehr im einzelnen dargestellt. Wie die Fig. 3 zeigt, wird das vom Verstärker 20 kommende Schwingungssignal drei Komparatoren 50, 51 und 52 zugeführt, die es mit verschiedenen fest vorgegebenen Spannungspegeln vergleichen. Zur Realisierung dieser Komparatoren können handelsübliche Bauelemente, beispielsweise vom Typ AM 686-CM der Firma Advanced Micro Devices oder vom Typ SP 9685-CM der Firma Plessey verwendet werden.

Alle diese Bauelemente besitzen Digitalausgänge Q und Q̄, an denen sie eine logische Eins bzw. eine logische Null abgeben, je nachdem, ob die an ihren "Plus"-Eingängen anliegende Meßspannung größer oder kleiner als die an ihren "Minus"-Eingängen anliegende Referenzspannung ist. Weiterhin ist diesen Bauelementen gemeinsam, daß sie sogenannte Latch-Enable-Eingänge (LE-Eingänge) besitzen, über die sie gesperrt bzw. aktiviert werden können. Im aktivierten Zustand ändert sich das Ausgangssignal an den Q- bzw. Q̄-Ausgängen bei jedem Über- bzw. Unterschreiten der jeweiligen Referenzspannung, während im gesperrten Zustand der jeweils letzte erreichte Logikpegel an diesen Ausgängen erhalten, d. h. also bis zu einer erneuten Aktivierung gespeichert bleibt. Die genannten Bauelemente unterscheiden sich lediglich darin, daß erstere TTL-Signale abgeben und an ihrem LE-Eingang eine logische Null zur Aktivierung benötigen, während die letzteren mit ECL-Bausteinen kompatibel sind und an ihrem LE-Eingang zur Aktivierung eine logische Eins brauchen.

Bei dem in Fig. 3 wiedergegebenen Ausführungsbeispiel wird der klareren Darstellung halber davon ausgegangen, daß nur TTL-kompatible Komparatoren Verwendung finden. Bei einer besonders bevorzugten Ausführungsform trifft dies allerdings nur für die Komparatoren 51 und 52 zu, während der Nulldurchgangs-Komparator 50 ein ECLkompatibles Bauelement ist. Es ist klar, daß in diesem Fall den Ausgängen des in Fig. 3 wiedergegebenen Nulldurchgangs-Komparators 50 ECL/TTL-Pegelumsetzer nachgeschaltet werden müssen, wenn im übrigen eine TTL-Logik verwendet wird, und daß vor dem LE-Eingang dieses Komparators ein invertierender TTL/ECL-Spannungsumsetzer angeordnet werden muß.

Aufgabe der Schaltungsanordnung 22 ist es im wesentlichen, das ordnungsgemäße Anschwingen des Resonanzsystems 18 festzustellen und daraufhin einen vorgegebenen Nulldurchgang dieser Schwingung zu detektieren und zur Abgabe eines zeitsignifikanten Signals zu verwenden.

Letzteres geschieht im wesentlichen mit Hilfe des Nulldurchgangskomparators 50, an dessen einem Eingang, wie in Fig. 3 dargestellt, das vom Verstärker 20 abgegebene Signal anliegt, während er an seinem anderen Eingang den Nullpegel erhält.

Da aber zu allen Zeiten, in welchen das Resonanzsystem 18 nicht schwingt, am Ausgang des Verstärkers 20 ein dem Nullpegel entsprechendes Signal erscheint, würde der Nulldurchgangs-Komparator 50 bei jeder kleinsten, beispielsweise durch Rausch- oder Störsignale verursachten Schwankung des Verstärker-Ausgangssignals ein Überschreiten des Nullpegels in der einen oder der anderen Richtung erkennen und an seinem Ausgang entsprechende Signale abgeben. Daher ist es erforderlich, den Nulldurchgangs-Komparator 50 über seinen LE-Eingang normalerweise zu sperren und ihn nur dann freizugeben, wenn das Resonanzsystem 18 wirklich zu einem Schwingungsvorgang angestoßen worden ist.

Dies wird durch die beiden weiteren Komparatoren 51 und 52 erkannt, von denen der erstere das Ausgangssignal des Verstärkers 20 mit einer vom Nullpegel verschiedenen ersten Referenzspannung $U_{Ref\,I}$ vergleicht, die so gewählt ist, daß sie praktisch die untere Grenze der vom Empfangskanal 16 gerade noch verarbeitbaren Signale definiert. Wie bereits erwähnt, ist die Maximalamplitude eines jeden Schwingungsvorganges abhängig von der Intensität des anstoßenden Lichtimpulses. Es wurde ebenfalls bereits erwähnt, daß für die aus Verstärker 20 und Schaltungsanordnung 22 bestehende Untereinheit des Empfangskanals 16 etwa ein Dynamikbereich von 1 : 15 erzielbar ist, wenn man eine Meßgenauigkeit von weniger als ± 1 cm anstrebt.

Dies hat seinen Grund einerseits darin, daß der Linearitätsbereich des Verstärkers 20 Ausgangssignale beispielsweise bis maximal 1500 mV zuläßt, daß andererseits aber Schwingungsvorgänge, deren Maximalamplitude kleiner als 100 mV ist, nicht mehr mit der erforderlichen Genauigkeit ausgewertet werden können, weil sonst das Signal-Rausch-Verhältnis so ungünstig wird, daß eine Meßgenauigkeit von weniger als ± 1 cm nicht mehr erzielbar ist.

Bei dem vorliegenden Beispiel ist es also zweckmäßig, $U_{Ref\,I}$ gleich 100 mV festzulegen, und nur solche Schwingungsvorgänge zur Erzeugung von zeitsignifikanten Signalen zuzulassen, deren zweite, d. h. größte Halbwelle eine Amplitude besitzt, die ihrem Absolutbetrag nach diesen Referenzwert übersteigt.

Für den den betreffenden Vergleich durchführenden Komparator 51 ergibt sich dabei das Problem, daß er sowohl auf Schwingungen ansprechen soll, deren maximale Amplitude beispielsweise 100,5 mV beträgt, als auch auf Schwingungen, deren maximale Amplitude 1500 mV erreicht. Der sogenannte "Overdrive" dieses Komparators kann sich also in einem Bereich von 0,5 mV bis 1400 mV bewegen.

Es wurde gefunden, daß die oben genannten, handelsüblichen Komparatoren, die bisher nicht beschriebene Eigenschaft besitzen, in einem unteren je nach Typ bis zu 1,5 mV bzw. bis zu 5 mV reichendem Overdrive-Bereich mit statistisch schwankenden Verzögerungen auf das Überschreiten des vorgegebenen Referenzpegels zu reagieren.

So kann es in völlig unvorhersehbarer Weise bis zu 100 ns dauern, bis nach einem nur sehr geringfügigen Überschreiten des Referenzpegels $U_{Ref\ I}$ durch das Ausgangssignal des Verstärkers 20 am Q-Ausgang des Komparators 51 das gewünschte Signal erscheint, was dazu führen kann, daß der in Antwort auf dieses Signal freizugebende Nulldurchgangs-Komparator 50 einen völlig falschen Nulldurchgang des Signals des Verstärkers 20 zur Auslösung eines zeitsignifikanten Signals verwendet, wodurch natürlich erhebliche Meßfehler entstehen.

Um dies zu verhindern, ist nun gemäß einem Merkmal der Erfindung ein weiterer Komparator 52 vorgesehen, der das Ausgangssignal des Verstärkers 20 mit einer zweiten Referenzspannung $U_{Ref\ II}$ vergleicht, deren Absolutwert um etwa 25 % bis 30 % kleiner ist als der Absolutwert von $U_{Ref\ I}$. Weiterhin ist den beiden Komparatoren 51 und 52 eine im vorliegenden Ausführungsbeispiel von einem D-Flip-Flop 54 gebildete logische Verknüpfungsschaltung zugeordnet, die den Nulldurchgangs-Komparator 50 nur dann freigibt, wenn die von den Komparatoren 51 und 52 beim Über- bzw. Wiederunterschreiten ihrer jeweiligen Referenzpegel durch die Ausgangsspannung des Verstärkers 20 erzeugten Steuer-Signale in der richtigen zeitlichen Reihenfolge erscheinen. Da die Vergleichsspannung $U_{Ref\ II}$ des zweiten Komparators 52 weit unterhalb der kleinsten, zu einer Auswertung gerade noch zugelassenen Maximalamplitude liegt, wird der zweite Komparator auch von den kleinsten, vom ersten Komparator 51 gerade noch zugelassenen Spannungswerten genügend weit übersteuert, so daß bei ihm die oben erwähnte Verzögerung des Steuer-Signals nicht auftritt. Wenn also die Bedingung erfüllt ist, daß er erste Komparator 51 ein Überschreiten seiner Referenzspannung $U_{Ref\ I}$ zuerst angezeigt hat, und daß dann der zweite Komparator 52 ein Wiederunterschreiten seiner Referenzspannung $U_{Ref\ II}$ durch die Ausgangsspannung des Verstärkers 20 anzeigt, so kann man sicher sein, daß die oben beschriebene Ausgangssignal-Verzögerung beim ersten Komparator 51 nicht aufgetreten ist.

Die eben geschilderte Bedingung wird dadurch abgefragt, daß durch das am Q-Ausgang des ersten Komparators 51 erscheinende Steuer-Signal der Q-Ausgang eines als Speicherschaltung dienenden D-Flip-Flops 55 auf eine logische Eins gesetzt wird, die am Dateneingang des D-Flip-Flops 54 anliegt. Damit und nur damit ist dieses D-Flip-Flop 54 vorbereitet, um bei einem über ein weiteres D-Flip-Flop 56 an seinen Takt-Eingang gelangenden, das Wiederunterschreiten von $U_{Ref\ II}$ anzeigenden Steuer-Signal des zweiten Komparators 52 zu reagieren.

Am Q-Ausgang des Flip-Flops 54 erscheint dann eine logische Eins, die über ein Verzögerungsglied 57 und ein NAND-Gatter 59 dem LE-Eingang des Nullpegel-Komparators 50 zugeführt wird und diesen freigibt, so daß er bei dem nächstfolgenden Nulldurchgang des Verstärkersignals entsprechende Ausgangssignale abgeben kann.

Die Zeitkonstante $\Theta$ des Verzögerungsgliedes 57 ist so gewählt, daß nicht sofort der nächste, auf das Wiederunterschreiten von $U_{Ref\ II}$ folgende sondern erst ein späterer, besonders bevorzugterweise der insgesamt vierte Nulldurchgang des betreffenden Schwingungsvorgangs vom Nulldurchgangs-Komparator 50 detektiert und zur Auflösung eines zeitsignifikanten Signals verwendet wird. Dies hat seinen Grund darin, daß zu diesem bezüglich des Aussendens des Meßlichtimpulses vergleichsweise spät liegenden Zeitpunkt mit Sicherheit damit gerechnet werden kann, daß alle durch das Aussenden des Lichtimpulses verursachten Störspannungen innerhalb des Meßgerätes abgeklungen sind, so daß hier also ein sehr ruhiger Zeitraum ausgenutzt wird, der eine sehr präzise Erkennung des tatsächlichen Nulldurchgangs der Sinusschwingung des Resonanzsystems 18 ermöglicht.

Das mit dem detektierten Nulldurchgang zeitlich streng gekoppelte zeitsignifikante Signal wird bei dem Ausführungsbeispiel nach Fig. 3 von dem $\bar{Q}$-Ausgang des Nulldurchgangs-Komparators 50 abgegeben.

Überschreitet das Ausgangssignal des Verstärkers 20 den Nullpegel in fallender Richtung, so erscheint an dem bis dahin auf logisch Null liegenden $\bar{Q}$-Ausgang eine logische Eins. Die dabei auftretende, ansteigende Signalflanke wird als zeitsignifikantes Signal zum Starten bzw. Anhalten der Lichtimpuls-Laufzeitmessung verwendet.

Während der Zeiten, zu denen mit Sicherheit feststeht, daß das Resonanzsystem 18 nicht anschwingen kann, weil kein Meßlicht- oder Referenzlicht-Impuls an der Photodiode 17 zu erwarten ist, soll verhindert werden, daß die Komparatoren 51 und 52 auf irgendwelche Störsignale ansprechen und somit zur Unzeit den Nulldurchgangs-Komparator 50 freigeben. Außerdem sollen die Komparatoren 51 und 52 nur auf die die größte Amplitude besitzende, d. h. im allgemeinen die zweite Halbwelle eines Schwingungsvorgangs, nicht aber auf später folgende Halbwellen ansprechen.

Das bedeutet, daß es zweckmäßig ist, die Komparatoren 51 und 52 während der gesamten, zwischen den einzelnen Lichtimpuls-Sendevorgängen liegenden Zeiträume zu sperren, sie erst kurz vor dem erwarteten Eintreffen eines Meßlicht- bzw. Referenzlicht-Impulses an der Photodiode 17 freizugeben und sie nach ihrem ordnungsgemäßen Ansprechen sofort wieder zu sperren. Dies geschieht mit Hilfe der D-Flip-Flops 55 und 56, deren Q-Ausgänge "normalerweise" auf einer logischen Eins liegen und somit den zugehörigen Komparator 51 bzw. 52 über dessen LE-Eingang sperren. Aus diesem Zustand werden sie erst kurz vor dem erwarteten Eintreffen eines Lichtimpulses an der Photodiode 17 durch das über die Leitung 29 zugeführte Rücksetzsignal zurückgesetzt.

Eine vergleichbare Funktion wird für den Nulldurchgangs-Komparator 50 sowohl von dem D-Flip-Flop 54 als auch von seinem eigenen $\bar{Q}$-Ausgang ausgeübt, der über das ODER-Gatter 58 und das NAND-Gatter 59 den LE-Eingang zunächst im Ruhezustand solange blockiert, bis das D-Flip-Flop 54 gesetzt wird, und nach dem Ansprechen des Nulldurchgangs-Komparators 50 diesen sofort, d. h. ohne die Verzögerung wieder sperrt, sobald der Nulldurchgangs-Komparator 50 in seine Ausgangslage zurückgekehrt ist.

Nun kann es ohne weiteres geschehen, daß zwar ein Lichtimpuls ausgesandt und damit auch ein Rücksetzsignal auf der Leitung 29 erzeugt wird, ohne daß jedoch ein vom Zielgegenstand reflektierter Lichtimpuls an der Photodiode 17 eintrifft, der kräftig genug ist, um das Resonanzsystem 18 so stark anzustoßen, daß das vom Resonanzsystem abgegebene und vom Verstärker 20 verstärkte Schwingungssignal eine die beiden Referenzpegel der Komparatoren 51 und 52 übersteigende Amplitude aufweist. Ohne weitere Maßnahmen hätte dies zur Folge, daß die Komparatoren 51 und 52 in ihrem freigegebenen Zustand relativ lange Zeit verharren würden und in diesem Zeitraum auf genügend kräftige Störungen ansprechen und somit die Erzeugung eines zu Fehlmessungen führenden zeitsignifikanten Signals veranlassen könnten. Um dem vorzubeugen, ist gemäß einer Ausgestaltung der Erfindung vorgesehen, daß dem Dateneingang des D-Flip-Flops 55 eine ein Ansprechen dieses D-Flip-Flops auf ein Steuersignal des ersten Komparators 51 ermöglichende logische Eins nicht fortwährend zugeführt wird. Statt dessen wird an diesen D-Eingang von der Ablaufsteuerung 10 her über die Leitung 30 ein Zeitfenstersignal angelegt, das gleichzeitig mit oder kurz nach dem auf der Leitung 29 erscheinenden Rücksetzsignal auf eine logische Eins springt und diesen Pegel nur so lange beibehält, bis seit dem Aussenden des Lichtimpulses ein Zeitraum vergangen ist, der der Laufzeit des Lichtimpulses bei maximal meßbarer Entfernung des Zielgegenstandes entspricht. Danach springt das Zeitfenstersignal wieder auf den Logikpegel Null zurück, so daß das D-Flip-Flop 55 durch ein Ansprechen des ersten Komparators 51 auf irgendwelche Störungen nicht mehr gesetzt und somit auch das D-Flip-Flop 54 nicht in einen Zustand gebracht werden kann, in dem der das zeitsignifikante Signal auslösende Nulldurchgangs-Komparator 50 freigegeben ist.

Gemäß Fig.3 ist in der Schaltungsanordnung 22 noch ein Flip-Flop 60 vorgesehen, das mit seinem Dateneingang ständig auf logisch Eins liegt, dessen Takteingang vom $\bar{Q}$-Ausgang des Nulldurchgangs-Komparators 50 angesteuert wird und dessen $\bar{Q}$-Ausgang einerseits unmittelbar an den Rücksetzeingang des D-Flip-Flops 54 und über ein Verzögerungsglied 61 an den Rücksetzeingang des Flip-Flops 60 selbst gelegt ist.

Aufgabe dieses in Art eines Monoflops sich nach einer durch das Verzögerungsglied 61 bestimmten Zeit selbst zurücksetzenden Flip-Flops 60 ist es einerseits, immer dann, wenn der Nulldurchgangs-Komparator 50 nach seiner Freigabe auf den ersten Nulldurchgang des Sinussignals des Verstärkers 20 anspricht, das D-Flip-Flop 54 sofort wieder in seine Ausgangslage zurückzusetzen, und andererseits beim Einschalten der gesamten Anordnung dafür zu sorgen, daß die Schaltungsanordnung 22 nicht in einen sich selbst blockierenden, den Meßbetrieb unmöglich machenden Zustand gerät.

Alle diese Funktionen sollen im folgenden nochmals zusammenhängend unter Bezugnahme auf Fig. 4 erläutert werden, in der über einer Zeitachse die Ausgangssignale der Bauelemente der Schaltungsanordnung 22 beim Auftreten eines in der obersten Zeile dieser Figur dargestellten Schwingungsvorgangs am Ausgang des Verstärkers 20 wiedergegeben sind. Dabei wird von einem relativ schwachen Lichtsignal ausgegangen, das das Resonanzsystem 18 so anstößt, daß der obere Referenzpegel $U_{Ref\,I}$ von der die größte Amplitude aufweisenden, zweiten Halbschwingung gerade noch soweit überschritten wird, daß es nicht zu der oben geschilderten Steuer-Signalverzögerung des ersten Komparators 51 kommt.

Wie man dem ganz linken Teil der Fig. 4 entnimmt, befinden sich in dem dem Anstoßen des Schwingungsvorgangs vorausgehenden Ruhezustand die Q-Ausgänge der D-Flip-Flops 56 und 55 jeweils auf einer logischen Eins, so daß die zugehörigen Komparatoren 52 und 51 gesperrt sind.

Gleiches gilt auch für den Nulldurchgangs-Komparator 50, der über das seinem LE-Eingang vorgeschaltete NAND-Gatter 59 dann gesperrt ist, wenn an wenigstens einem der beiden Eingänge dieses Gatters 59 eine logische Null anliegt. In dem in Fig. 4 ganz links dargestellten Ruhezustand kommt diese logische Null sowohl vom ODER-Gatter 58, an dessen beiden Eingängen jeweils eine logische Null anliegt, die vom $\bar{Q}$-Ausgang des Nulldurchgangs-Komparators 50 bzw. vom Q-Ausgang des zu diesem Zeitpunkt zurückgesetzten D-Flip-Flops 54 stammt, als auch über das Verzögerungsglied 57 von diesem Q-Ausgang des D-Flip-Flops 54.

Es sind also sämtliche Komparatoren 50, 51 und 52 gesperrt, und es liegt am $\bar{Q}$-Ausgang des zweiten Komparators 52, am Q-Ausgang des ersten Komparators 51 und am Q-Ausgang des Nulldurchgangs-Komparators 50 jeweils eine von der Erfassung eines vorausgehenden Schwingungsvorgangs erhalten gebliebene logische Eins an.

Wie bereits erwähnt, wäre die Schaltungsanordnung 22 in diesem Zustand nicht in der Lage, irgendwelche am Ausgang des Verstärkers 20 erscheinende Schwingungsvorgänge wahrzunehmen. Daher wird kurz vor dem Eintreffen eines ausgesandten Lichtimpulses an der Photodiode 17 von der Ablaufsteuerung 10 her ein in Fig. 4 in der zweiten Zeile von oben dargestelltes Rücksetzsignal erzeugt.

Durch dieses Rücksetzsignal geht die logische Eins am Q-Ausgang des D-Flip-Flops 56 in eine logische Null über, so daß der zweite Komparator 52 freigegeben wird, ohne jedoch sein Ausgangssignal zu ändern, da ja vom Verstärker 20 noch ein Nullpegel-Signal abgegeben wird, das unterhalb der vom zweiten Komparator 52 überwachten Referenzspannung $U_{Ref\ II}$ liegt.

Weiterhin wird durch das Rücksetzsignal das D-Flip-Flop 55 zurückgesetzt, so daß auch an dessen Q-Ausgang eine logische Null erscheint, die den ersten Komparator 51 freigibt. Das Ausgangssignal am Q-Ausgang des ersten Komparators 51 geht dabei sofort in eine logische Null über, da ja auch dieser Komparator vom Verstärker 20 eine Eingangsspannung erhält, die kleiner als die von ihm überwachte Referenzspannung $U_{Ref\ I}$ ist.

Durch das in Fig. 4 in der dritten Zeile von oben wiedergegebene, bei dem hier dargestellten Ausführungsbeispiel etwas später als das Rücksetzsignal erzeugte Zeitfenstersignal wird der Dateneingang des D-Flip-Flops 55 auf eine logische Eins gelegt, so daß dieses D-Flip-Flop für ein nunmehr folgendes Steuersignal des ersten Komparators 51 reaktionsbereit ist.

Der Q-Ausgang des D-Flip-Flops 54 befindet sich in dem dem Anstoßen des Schwingungsvorganges vorausgehenden Ruhezustand auf einer logischen Null, die auch am Ausgang des Verzögerungsgliedes 57 vorhanden ist und am Ausgang des NAND-Gatters 59 eine den Nulldurchgangs-Komparator 50 sperrende logische Eins erzeugt. Der Nulldurchgangs-Komparator 50 befindet sich dabei in einem Zustand, in welchem an seinem Q-Ausgang eine logische Eins und somit an seinem Q̄-Ausgang eine logische Null vorhanden ist. Letztere erzeugt in Verbindung mit der am Q-Ausgang des D-Flip-Flops 54 vorhandenen logischen Null eine logische Null am Ausgang des ODER-Gatters 58.

Wenn dann nach einer gewissen Zeitspanne der durch einen empfangenen Lichtimpuls angestoßene und vom Verstärker 20 verstärkte Schwingungsvorgang einsetzt, sind also die Komparatoren 51 und 52 freigegeben, während der Nulldurchgangs-Komparator 50 noch immer gesperrt ist.

Wie in Fig. 4 dargestellt, überschreitet das vom Verstärker 20 abgegebene Signal im Verlauf der zweiten Schwingungs-Halbwelle zunächst die niedrigere Referenzspannung $U_{Ref\ II}$, wodurch der Q̄-Ausgang des zweiten Komparators 52 von einer logischen Eins auf eine logische Null abfällt. Dies bleibt ohne weitere Wirkung, da der dem Q̄-Ausgang des zweiten Komparators 52 nachgeschaltete Takteingang des D-Flip-Flops 56 nur auf steigende Flanken reagiert.

Im weiteren Verlauf übersteigt dann das vom Verstärker 20 abgegebene Signal auch die größere Referenzspannung $U_{Ref\ I}$, wodurch der Q-Ausgang des ersten Komparators 51 von einer logischen Null auf eine logische Eins schaltet. Diese positive Flanke dient als Steuersignal und triggert den Takteingang des durch das auf logisch Eins liegende Zeitfenstersignal an seinem Dateneingang freigegebenen D-Flip-Flops 55, so daß an dessen Q-Ausgang ebenfalls eine logische Eins erscheint, die einerseits den ersten Komparator 51 sofort sperrt, so daß er im weiteren Verlauf an seinem Q-Ausgang die nunmehr erreichte logische Eins beibehält, und die andererseits das D-Flip-Flop 54 über dessen D-Eingang für den Empfang eines Taktsignals vorbereitet.

Dieses Taktsignal wird dadurch erzeugt, daß das Ausgangssignal des Verstärkers 20 nach Durchlaufen des Scheitels der Halbschwingung zunächst die obere Referenzspannung (was ohne Wirkung bleibt) und dann die untere Referenzspannung $U_{Ref\ II}$ durchläuft, was den Q̄-Ausgang des zweiten Komparators 52 dazu veranlaßt, von der vorhandenen logischen Null auf eine logische Eins hochzuschalten. Die dabei entstehende steigende Flanke dient als Steuersignal und triggert das mit seinem Dateneingang ständig auf logisch Eins liegende D-Flip-Flop 56, so daß auch an dessen Q-Ausgang eine von logisch Null auf logisch Eins führende steigende Flanke erscheint, die das D-Flip-Flop 54 dann und nur dann triggert, wenn an dessen Dateineingang bereits eine vom D-Flip-Flop 55 gespeicherte logische Eins anliegt.

Sollte also die bereits mehrfach beschriebene auf einem sehr geringen Overdrive beruhende Verzögerung des Steuersignals des ersten Komparators 51 eingetreten sein, so schaltet das D-Flip-Flop 56 vor dem D-Flip-Flop 55 und das D-Flip-Flop 54 bleibt in seinem zurückgesetzten Zustand, wodurch der Nulldurchgangs-Komparator im gesperrten Zustand bleibt. Es wird hier also mit Sicherheit verhindert, daß durch ein zu spätes Schalten des ersten Komparators 51 ein anderer als der beabsichtigte vierte Nulldurchgang des Ausgangssignals des Verstärkers 20 vom Nulldurchgangs-Komparator 50 zur Auslösung eines zeitsignifikanten Signals verwendet wird.

Dem gleichen Zweck dient es, daß durch die beim Setzen von D-Flip-Flop 56 an dessen Q̄-Ausgang erscheinende logische Null das D-Flip-Flop 55 zwangsweise gesetzt und dadurch der erste Komparator 51 für den weiteren Verlauf gesperrt wird. Bei einem einwandfreien Signalablauf ist das D-Flip-Flop 55 beim Schalten von D-Flip-Flop 56 ohnehin bereits gesetzt, so daß der vom Q̄-Ausgang des D-Flip-Flops 56 ausgehende Setzimpuls ohne Wirkung bleibt.

Wie in Fig. 4 dargestellt, schaltet bei einem regulären Signalablauf der Q-Ausgang des D-Flip-Flops 54 nahezu gleichzeitig mit dem Schalten von D-Flip-Flop 56 auf eine logische Eins, die einerseits unmittelbar an das ODER-Gatter 58 gelangt und durch die somit an dessen Ausgang erscheinende logische Eins die Sperrwirkung des zu diesem Zeitpunkt noch auf logisch Null liegende Q̄-Ausgangs des Nulldurchgangs-Komparators 50 aufhebt, und andererseits durch das Verzögerungsglied 57 um die Zeit Θ verzögert an das Gatter 59 gelangt, dessen Ausgang daraufhin von der bisher vorhandenen logischen Eins auf eine logische Null abfällt, wodurch der Nulldurchgangs-Komparator 50 endgültig freigegeben wird. Die Verzögerungszeit Θ ist dabei so gewählt, daß zu diesem Freigabezeitpunkt das Ausgangssignal des Verstärkers 20 gerade die vierte (= zweite positive) Halbwelle durchläuft, so daß der Nulldurchgangs-Komparator 50 mit Sicherheit den nächsten aus dem positiven in den negativen Bereich führenden, in Fig. 4 mit dem Pfeil N bezeichneten Nulldurchgang detektiert. Tritt dieser in einer sehr ruhigen, von Störspannungen freien Phase der gesamten Meßanordnung stattfindende Nulldurchgang ein, so schaltet der Q̄-Ausgang des Nulldurchgangs-Komparators 50 von der bisher vorhandenen logischen Null auf eine logische Eins. Die dabei entstehende positive Flanke F dient als zeitsignifikantes Signal zum Starten oder Anhalten der jeweiligen Lichtimpuls-Laufzeitmessung, und triggert gleichzeitig das bis dahin zurückgesetzte Flip-Flop 60; die dabei an dessen Q̄-Ausgang entstehende logische Null gelangt mit der durch das Verzögerungsglied 61 gegebenen Verzögerung an den Rücksetzeingang des Flip-Flops 60, so daß dieses nach einer entsprechenden Zeit in seinen Ausgangszustand zurückgesetzt wird, d. h. also mit seinem Q̄-Ausgang auf logisch Eins zurückkehrt. Die hier kurzfristig aufgetretene logische Null wird aber auch dem Rücksetzeingang von D-Flip-Flop 54 zugeführt und veranlaßt den Q-Ausgang dieses D-Flip-Flops, von der logischen Eins auf eine logische Null zurückzuschalten.

Diese logische Null wird durch das Verzögerungsglied 57 um die Zeit Θ' (, die größer als die beim Umschalten auf die logische Eins auftretende Verzögerung Θ ist) verzögert und bleibt am Eingang des ODER-Gatters 58 zunächst wirkungslos, da an dessen anderem Eingang die vom Q̄-Ausgang des Nulldurchgangs-Komparators 50 stammende logische Eins noch anliegt und sich am Ausgang des ODER-Gatters 58 durchsetzt. Am Ausgang des NAND-Gatters 59 bleibt also zunächst eine logische Null erhalten, die den Nulldurchgangs-Komparator 50 solange aktiviert, bis das vom Verstärker 20 abgegebene Signal nach Durchlaufen der fünften Halbwelle den Nullpegel wieder in positiver Richtung überschritten hat. Dabei schaltet dann der Nulldurchgangs-Komparator 50 an seinem Q-Ausgang wieder auf eine logische Eins und an seinem Q̄-Ausgang auf eine logische Null, wobei dann letztere in Verbindung mit der zu diesem Zeitpunkt am Q-Ausgang von D-Flip-Flop 54 bereits ebenfalls vorhandenen logischen Null über das ODER-Gatter 58 am betreffenden Eingang des NAND-Gatters 59 eine logische Null erzeugt, so daß der Nulldurchgangs-Komparator 50 in dem jetzt erreichten, für die nächste Schwingungssignal-Auswertung günstigen Zustand gesperrt und festgehalten wird. Kurze Zeit später geht dann auch der Ausgang des Verzögerungsgliedes 57 auf logisch Null, so daß jetzt wieder eine doppelte Sperrung des Nulldurchgangs-Komparators 50 vorhanden ist.

Gesperrt sind auch alle übrigen Komparatoren und Flip-Flops der Schaltungsanordnung 22, die, wie man der rechten Seite von Fig. 4 entnimmt, alle Schaltzustände erreicht haben, die bis zum nächsten Rücksetzimpuls beibehalten werden sollen.

Wie oben dargelegt wurde, setzt das Flip-Flop 60 die beim Ansprechen des Nulldurchgangs-Komparators 50 an dessen Q̄-Ausgang auftretende logische Eins praktisch verzögerungsfrei in eine logische Null um, durch die das D-Flip-Flop 54 zurückgesetzt wird. Dieselbe Funktion ließe sich auch dadurch erreichen, daß der Q-Ausgang des Nulldurchgangs-Komparators 50, der beim Ansprechen des Komparators auf logisch Null geht, direkt mit dem Rücksetzeingang des D-Flip-Flops 54 verbunden wird. Das könnte aber dazu führen, daß beim Einschalten, bei dem die Ausgänge der einzelnen Bauelemente in zufälliger Weise auf logisch Eins oder logisch Null springen, sowohl am Q-Ausgang des Nulldurchgangs-Komparators als auch am Q-Ausgang des Flip-Flops 54 eine logische Null erscheint, wodurch sich diese beiden Bauelemente auf Dauer gegenseitig blockieren würden.

Um dies zu verhindern, ist das Flip-Flop 60 eingeführt, das nur für kurze Zeit in dem das D-Flip-Flop 54 sperrenden Zustand (logisch Null am Q̄-Ausgang) bleiben kann und sich dann automatisch selbst zurücksetzt, wodurch der Rücksetzeingang von D-Flip-Flop 54 auf logisch Eins gelegt wird, so daß dieses D-Flip-Flop auf die an seinen anderen Eingängen auftretenden Signale reagieren kann.

**Patentansprüche**

1. Empfängerschaltung (16) für ein nach dem Prinzip der Lichtimpuls-Laufzeitmessung arbeitendes Entfernungsmeßgerät mit

- einem zumindest die vom Zielgegenstand reflektierten Meßlichtimpulse empfangenden elektro-optischen Empfänger (17),
- einem Resonanzsystem (18), das dem elektro-optischen Empfänger (17) nachgeschaltet ist und durch das elektrische Signal, das der Empfänger (17) beim Empfang eines einzelnen Lichtimpulses erzeugt, zu einem gedämpften Schwingungsvorgang angestoßen wird und ein entsprechendes Schwingungssignal abgibt,
- einer Komparatoranordnung (51, 52) zum Erkennen des Anschwingens des Resonanzsystems (18), die einen ersten Komparator (51) umfaßt, der ein Steuer-Signal abgibt, wenn der Absolutwert des Schwingungssignals bei einer vorgegebenen Halbwelle einen vorgegebenen, von Null verschiedenen Wert übersteigt, und mit

- einem Nulldurchgangs-Komparator (50), der nur nach Freigabe durch die Komparatoranordnung zum Erkennen des Anschwingens des Resonanzsystems (18) ein Signal zum Auslösen eines zeitsignifikanten Signals für eine nachgeschaltete Zeitmeßvorrichtung abgibt,

dadurch gekennzeichnet, daß die Komparatoranordnung einen zweiten Komparator (52) umfaßt, der ein Steuer-Signal abgibt, wenn der Absolutwert des Schwingungssignals bei der vorgegebenen Halbwelle einen zweiten, von Null verschiedenen Wert, der kleiner als der vorgegebene Wert ist, bei dessen Überschreiten der erste Komparator (51) anspricht, nach einem vorausgehenden Überschreiten wieder unterschreitet, und daß eine Freigabe-Schaltungsanordnung (54 - 60) vorgesehen ist, die ein Freigabesignal für den Nulldurchgangs-Komparator (50) nur dann erzeugt, wenn das Steuer-Signal des zweiten Komparators (52) später als das Steuer-Signal des ersten Komparators (51) auftritt.

2. Empfängerschaltung nach Anspruch 1, dadurch gekennzeichnet, daß ein das Schwingungssignal des Resonanzsystems (18) verstärkender Verstärker (20) vorgesehen ist, dessen Ausgangssignal der Komparatoranordnung zum Erkennen des Anschwingens des Resonanzsystems (18) und dem Nulldurchgangs-Komparator (50) zugeführt wird, und daß der Verstärker (20) eine Regelschaltung (90) umfaßt, die den Null-Gleichspannungspegel am Verstärkerausgang konstant hält.

3. Empfängerschaltung nach Anspruch 1 oder 2, dadurch gekennzeichnet, daß die Freigabe-Schaltungsanordnung (54 - 60) eine durch das Steuer-Signal des ersten Komparators (51) setzbare Speicherschaltung (55) und eine logische Verknüpfungsschaltung (54) umfaßt, die nur bei gesetzter Speicherschaltung das Steuer-Signal des zweiten Komparators (52) als Freigabesignal für den Nulldurchgangs-Komparator (50) weitergibt.

4. Empfängerschaltung nach Anspruch 2 oder 3, dadurch gekennzeichnet, daß die vorgegebene Halbwelle, deren Amplitude vermittels der beiden Komparatoren (51, 52) mit den beiden vorgegebenen Werten verglichen wird, die zweite Halbwelle des jeweiligen Schwingungssignals des Resonanzsystems (18) ist.

5. Empfängerschaltung nach Anspruch 4, dadurch gekennzeichnet, daß die Freigabe-Schaltungsanordnung eine Verzögerungseinrichtung (57) enthält, die das von der Verknüpfungsschaltung (54) weitergegebene Freigabesignal für den Nulldurchgangs-Komparator (50) so verzögert, daß ein späterer als der erste auf das Steuer-Signal des zweiten Komparators (52) folgender Nulldurchgang des Schwingungssignals des Resonanzsystems (18) zur Erzeugung des zeitsignifikanten Signals verwendet wird.

6. Empfängerschaltung nach Anspruch 5, dadurch gekennzeichnet, daß die Verzögerungszeit der Verzögerungseinrichtung (57) so bemessen ist, daß der vierte auf das Anstoßen des Schwingungsvorgangs folgende Nulldurchgang zur Auslösung des zeitsignifikanten Signals verwendet wird.

7. Empfängerschaltung nach einem der Ansprüche 3 bis 6, dadurch gekennzeichnet, daß die logische Verknüpfungsschaltung von einem normalerweise zurückgesetzten D-Flip-Flop (54) gebildet ist, an dessen Dateneingang ein gleichzeitig mit dem Steuer-Signal des ersten Komparators (51) erzeugtes Freigabesignal und an dessen Takteingang ein gleichzeitig mit dem Steuer-Signal des zweiten Komparators (52) erzeugtes Taktsignal gelegt ist und dessen einer Ausgang (Q) im gesetzten Zustand des D-Flip-Flops (54) über die Verzögerungseinrichtung (57) das den Nulldurchgangs-Komparator (50) freigebende Signal abgibt, und daß das D-Flip-Flop (54) so beschaltet ist, daß es beim ersten Ansprechen des Nulldurchgangs-Komparators (50) zurückgesetzt wird.

8. Empfängerschaltung nach Anspruch 7, dadurch gekennzeichnet, daß der Nulldurchgangs-Komparator (50) über eine Gatterschaltung (59) sowohl durch das von der Verzögerungseinrichtung (57) verzögerte Ausgangssignal des D-Flip-Flops (54) als auch durch das von einem (Q̄) seiner Ausgänge (Q, Q̄) im Ruhezustand abgegebene Signal sperrbar ist und daß letzteres Signal durch eine Gatterschaltung (58) daran gehindert ist, den Nulldurchgangs-Komparator (50) zu sperren, wenn das D-Flip-Flop (54) gesetzt ist.

9. Empfängerschaltung nach einem der Ansprüche 3 bis 8, dadurch gekennzeichnet, daß eine die Abgabe weiterer Steuersignale durch den ersten Komparator (51) nach dem ersten betragsmäßigen Überschreiten des ersten Referenzpegels ($U_{Ref\,I}$) blockierende erste Sperrschaltung (55) und eine die Abgabe weiterer Steuersignale durch den zweiten Komparator (52) nach einem betragsmäßigen Über- und Wiederunterschreiten des zweiten Referenzpegels ($U_{Ref\,II}$) blockierende zweite Sperrschaltung (56) vorgesehen ist und daß die beiden Sperrschaltungen durch ein erst kurz vor dem Eintreffen eines Lichtimpulses am elektro-optischen Empfänger (17) erzeugbares Rücksetzsignal in ihren nichtblockierenden Zustand gebracht werden.

10. Empfängerschaltung nach Anspruch 9, dadurch gekennzeichnet, daß die erste Sperrschaltung von einem gleichzeitig als die genannte Speicherschaltung dienenden weiteren D-Flip-Flop (55) und die zweite Sperrschaltung von einem zusätzlichen D-Flip-Flop (56) gebildet ist.

11. Empfängerschaltung nach einem der Ansprüche 3 bis 10, dadurch gekennzeichnet, daß die Speicherschaltung (55) nur während des Anliegens eines kurz vor dem erwarteten Empfang eines Lichtimpulses durch den Empfänger (17) erzeugten und in seiner zeitlichen Länge auf die maximale Meßentfernung abgestimmten Zeitfenstersignals (29) für ein vom ersten Komparator (51) abgegebenes Steuer-Signal empfangsbereit geschaltet ist.

## Claims

1. A receiver circuit (16) for a distance measuring apparatus operating according to the principle of measuring the time of travel of light pulses comprising

- an electro-optical receiver (17), receiving at least the measuring light pulses reflected from the target,
- a resonance system (18), the input of which is connected to the output of the electro-optical receiver (17), said resonance system being exited by means of the electrical signal which is generated by the receiver (17) upon receipt of an individual light pulse to perform a damped oscillation and to provide a corresponding oscillation signal,
- a comparator arrangement (51, 52) for detecting the starting of an oscillation of the resonance system (18), comprising a first comparator (51) providing a control signal when, at a predetermined half-wave, the absolute value of the oscillation signal exceeds a predetermined value which is different from zero, and
- a zero-transition comparator (50) which only after being enabled by the comparator arrangement for detecting the starting of an oscillation of the resonance system (18) provides a signal for triggering a time significant signal for a time measuring unit connected therebehind,

characterized in that the comparator arrangement comprises a second comparator (52) providing a control signal when, at the predetermined half-wave, the absolute value of the oscillation signal falls again below a second value which is different from zero and is smaller than the predetermined value at the exceeding of which the first comparator (51) responds, the absolute value having exceeded said second value before, and in that an enabling circuit arrangement (54 to 60) is provided which generates an enabling signal for the zero-transition comparator (50) only, if the control signal from the second comparator (50) occurs later than the control signal from the first comparator (51).

2. A receiver circuit according to claim 1, characterized in that an amplifier (20) is provided which amplifies the oscillation signal of the resonance system (18) and the output signal of which is fed to the comparator arrangement for detecting the starting of an oscillation of the resonance system (18) and to the zero-transition comparator (50), and in that the amplifier (20) comprises a closed-loop control circuit (90) maintaining constant the zero d.c. voltage level at the output of the amplifier.

3. A receiver circuit according to claim 1 or 2, characterized in that the enabling circuit arrangement (54 to 60) comprising a memory circuit (55) which is set by the control signal from the first comparator (51), and a logic gating circuit (54) which passes on the control signal from the second comparator (52) as an enabling signal for the zero-transition comparator (50) only, if the memory circuit is set.

4. A receiver circuit according to claim 2 or 3, characterized in that the predetermined half-wave, the amplitude of which is compared with the two predetermined values by means of the two comparators (51, 52) is the second half-wave of the respective oscillation signal of the resonance system (18).

5. A receiver circuit according to claim 4, characterized in that the enabling circuit arrangement comprises a delay means (57) which delays the enabling signal for the zero-transition comparator (50) passed on by the logic gating circuit (54) in such a way that for generating the time significant signal a zero-transition of the oscillation signal of the resonance system (18) is used which is not the first but a later zero transition following after the control signal from the second comparator (52).

6. A receiver circuit according to claim 5, characterized in that the delay time of the delay means (57) is so adjusted that for triggering the time significant signal, the fourth zero-transition is used which follows upon the triggering of the oscillation.

7. A receiver circuit according to any of claims 3 to 6, characterized in that the logic gating circuit is a usually reset D-flip-flop (54) to the data input of which an enabling signal is applied which is generated simultaneously with the control signal from the first comparator (51), and to the clock input of which a clock signal is applied which is generated simultaneously with the control signal from the second comparator (52), and the one output (Q) of which provides in the set condition of the D-flip-flop (54) via the delay means (57) the signal enabling the zero-transition comparator (50), and in that the D-flip-flop (54) is so connected that it is reset upon the first reaction of the zero-transition comparator (50).

8. A receiver circuit according to claim 7, characterized in that the zero-transition comparator (50) can be blocked via a gate circuit (59) by the output signal of the D-flip-flop (54) delayed by the delay means (57) as well as by the signal which, in its rest condition, is provided by

one ($\bar{Q}$) of its outputs (Q, $\bar{Q}$), and in that the last named signal is inhibited by a gate circuit (58) to block the zero-transition comparator (50) if the D-flip-flop (54) is set.

9. A receiver circuit according to any of claims 3 to 8, characterized in that there are provided a first blocking circuit (55) blocking the delivery of further control signals by the first comparator (51) after the absolute value has exceeded the first reference level ($U_{Ref\ I}$) the first time, and a second blocking circuit (56) blocking the delivery of further control signals by the second comparator (52) after the absolute value has exceeded and thereafter fallen below the second reference level ($U_{Ref\ II}$), and in that the two blocking circuits are set into their non-blocking state by a reset signal which is not generated but a short time before the arrival of a light pulse at the electro-optical receiver (17).

10. A receiver circuit according to claim 9, characterized in that the first blocking circuit is a further D-flip-flop (55) which is also used as said memory circuit, and in that the second blocking circuit is an additional D-flip-flop (56).

11. A receiver circuit according to any of claims 3 to 10, characterized in that the memory circuit (55) is controlled to be ready for receiving a control signal from the first comparator (51) only during the time in which a time window signal (29) is applied which is generated a short time before the expected reception of a light pulse by the receiver (17) and which, with respect to its length in time, is adapted to the maximum measuring distance.

## Revendications

1. Circuit récepteur (16) pour un télémètre fonctionnant selon le principe de la mesure du temps de parcours d'impulsions lumineuses, comprenant:

- un récepteur électro-optique (17) recevant au moins les impulsions lumineuses refléchies par l'objet visé,
- un système de résonance (18) qui est monté après le récepteur électro-optique (17) et qui est excité par le signal électrique qu'engendre le récepteur (17) lors de la réception d'une seule impulsion lumineuse pour engendrer un processus d'oscillation amorti et fournir un signal oscillant correspondant,
- un dispositif comparateur (51, 52) destiné à reconnaître la naissance d'une oscillation du système de résonance (18), lequel comprend un premier comparateur (51) qui fournit un signal de commande lorsque la valeur absolue du signal oscillant dépasse vers le haut une valeur prédéterminée différente de zéro pour une demi-onde donnée, et comprenant:
- un comparateur de passage par le zéro (50) qui fournit un signal pour le déclenchement d'un signal temporellement significatif pour un dispositif de mesure du temps monté en aval, mais seulement après son déblocage par le dispositif comparateur destiné à reconnaître la naissance d'une oscillation du système de résonance (18),

caractérisé par le fait que le dispositif comparateur comprend un second comparateur (52) qui fournit un signal de commande lorsque la valeur absolue du signal oscillant, pour la demi-onde prédéterminée, dépasse à nouveau vers le bas, après un dépassement préalable vers le haut, une seconde valeur différente de zéro qui est inférieure à la valeur prédéterminée au dépassement vers le haut de laquelle répond le premier comparateur (51), et par le fait qu'il est prévu un circuit de déblocage (54 - 60) qui engendre un signal de déblocage pour le comparateur de passage par le zéro (50), mais seulement, lorsque le signal de commande du second comparateur (52) intervient plus tard que le signal de commande du premier comparateur (51).

2. Circuit récepteur selon la revendication 1, caractérisé par le fait qu'il est prévu un amplificateur (20) qui amplifie le signal oscillant du système de résonance (18) et dont le signal de sortie est amené au dispositif comparateur destiné à reconnaître la naissance d'une oscillation du système de résonance (18) et au comparateur de passage par le zéro (50), et par le fait que l'amplificateur (20) comprend un circuit de régulation (90) qui maintient constant le niveau zéro de tension continue à la sortie de l'amplificateur.

3. Circuit récepteur selon la revendication 1 ou 2, caractérisé par le fait que le circuit de déblocage (54 - 60) comprend une mémoire (55) activée par le signal de commande du premier comparateur (51) et une porte logique (54) qui transmet le signal de commande du second comparateur (52) comme signal de déblocage pour le comparateur de passage par le zéro (50), mais seulement lorsque la mémoire est activée.

4. Circuit récepteur selon la revendication 2 ou 3, caractérisé par le fait que la demi-onde prédéterminée dont l'amplitude est comparée au moyen des deux comparateurs (51, 52) aux deux valeurs prédéterminées est constituée par la deuxième demi-onde de chaque signal oscillant du système de résonance (18).

5. Circuit récepteur selon la revendication 4, caractérisé par le fait que le circuit de déblocage comprend un dispositif de temporisation (57) qui retarde le signal de déblocage fourni par la porte logique (54) et destiné au comparateur de passage par le zéro (50), et ce, de telle manière que l'on utilise, pour engendrer le signal temporellement significatif, un passage par le zéro du signal oscillant du système de résonance (18) qui est postérieur au premier suivant le signal de commande du second comparateur (52).

6. Circuit récepteur selon la revendication 5, caractérisé par le fait que le temps de retard du dispositif de temporisation (57) est choisi de telle manière que l'on utilise, pour déclencher le signal temporellement significatif, le quatrième passage par le zéro suivant l'excitation du processus d'oscillation.

7. Circuit récepteur selon l'une des revendications 3 à 6, caractérisé par le fait que la porte logique est constituée par une bascule D (54) normalement remise à 0 dont l'entrée des données reçoit un signal de déblocage engendré en même temps que le signal de commande du premier comparateur (51), dont l'entrée de l'horloge reçoit un signal d'horloge engendré en même temps que le signal de commande du second comparateur (52), et dont l'une des sorties (Q), dans l'état 1 de la bascule D (54), fournit par l'intermédiaire du dispositif de temporisation (57) le signal qui débloque le comparateur de passage par le zéro (50), et par le fait que la bascule D (54) es t montée de telle sorte qu'elle repasse au 0 lors de la première réponse du comparateur de passage par le zéro (50).

8. Circuit récepteur selon la revendication 7, caractérisé par le fait que le comparateur de passage par le zéro (50) peut être bloqué par l'intermédiaire d'une porte (59), aussi bien par le signal de sortie de la bascule D (54) retardé par le circuit de temporisation (57) que par le signal fourni à l'état de repos par l'une (Q̄) de ses sorties (Q, Q̄), et par le fait que ce dernier signal est empêché par une porte (58) de bloquer le comparateur de passage par le zéro (50) lorsque la bascule D (54) est à l'état 1.

9. Circuit récepteur selon l'une des revendications 3 à 8, caractérisé par le fait qu'il est prévu un premier circuit de blocage (55) qui bloque la fourniture d'autres signaux de commande par le premier comparateur (51) après la valeur absolue a dépassé la première fois vers de laut le premier niveau de référence ($U_{Ref I}$), et un second circuit de blocage (56) qui bloque la fourniture d'autres signaux de commande par le second comparateur (52) après la valeur absolue a dépasse vers le haut et à nouveau vers le bas le second niveau de référence ($U_{Ref II}$), et par le fait que les deux circuits de blocage sont amenés dans leur état de non-blocage par un signal de remise à 0 qui peut être engendré seulement peu avant l'arrivée d'une impulsion lumineuse sur le récepteur électro-optique (17).

10. Circuit récepteur selon la revendication 9, caractérisé par le fait que le premier circuit de blocage constitué par une autre bascule D (55) servant en même temps que ladite mémoire, et que le second circuit de blocage est constitué par une bascule D supplémentaire (56).

11. Circuit récepteur selon l'une des revendications 3 à 10, caractérisé par le fait que la mémoire (55) n'est commutée vers sa position où elle est prête à recevoir un signal de commande fourni par le premier comparateur (51) que pendant la présence d'un signal de créneau temporel (29) qui est engendré peu avant la réception attendue d'une impulsion lumineuse par le récepteur (17), et qui est accordé dans sa largeur dans le temps sur la distance à mesurer maximale.

FIG. 1

FIG. 2

DIODENVOR-SPANNUNG VON 44

SINUS-AUSGANGSSIGNAL ZUR SCHALTUNGSEINHEIT 22

3

# FIG. 3

U$_{Ref\ II}$

LE

K

Q

$\overline{Q}$

52

D
TAKT
R

FF

Q

$\overline{Q}$

56

+

U$_{Ref\ I}$

LE

K

Q

$\overline{Q}$

51

D
TAKT
R

S
FF
R

Q

$\overline{Q}$

55

30

ZEITFENSTER-
SIGNAL VON 10

29

RÜCKSETZ-
SIGNAL VON 10

54

Q
$\overline{Q}$

FF

D
TAKT
R

57 VERZ

58

59

+

D
TAKT
R

FF

Q

$\overline{Q}$

60

VERZ

61

23

ZEITSIGNIFIKANTE
SIGNALFLANKE
NACH 10

NULLPEGEL

LE

K

$\overline{Q}$

Q

50

22

VOM VERSTÄRKER 20

# FIG. 4